# EUROPEAN PATENT SPECIFICATION

(11) **EP 2 274 066 B1**
(45) Date of publication and mention of the grant of the patent: **24.06.2020**
(21) Application number: 09730949.6
(22) Date of filing: 14.04.2009
(51) Int. Cl.: B01D 39/20, B01D 67/00, B01D 71/02

(54) **A CERAMIC DEAD-END FILTER, A FILTER SYSTEM AND METHOD OF FILTERING**
KERAMIK-DEAD-END FILTER, FILTERSYSTEM UND FILTRIERUNGSVERFAHREN
FILTRE AVEUGLE EN CÉRAMIQUE, SYSTÈME DE FILTRE ET PROCÉDÉ DE FILTRATION

(30) Priority: 11.04.2008 DK 200800547
(43) Date of publication of application: 19.01.2011
(73) Proprietor: LiqTech International A/S, 2750 Ballerup (DK)
(72) Inventor: JOHANSEN, Kenneth Højrup, DK-2800 Lyngby (DK); KJÆR, Jens Husted, DK-2840 Holte (DK)
(74) Representative: Plougmann Vingtoft a/s
(86) International application number: PCT/DK2009/050081
(87) International publication number: WO 2009/124555

(56) References cited:
- EP-A- 1 607 129
- WO-A-2005/005016
- DE-A1-102004 035 334
- US-B1- 6 227 382

## Description

### TECHNICAL FIELD

The invention relates to a ceramic filter for filtration of liquid such as water, juice, oils, biological liquids and other liquids. The invention also relates to a filtration system and a method of filtration.

### BACKGROUND ART

For many years sand filters have been the main choice for filtering liquids such as water, in particular if larger amounts of liquid needed to be filtered.

Most water is purified by filtration for human consumption, but water purification may also be designed for a variety of other purposes, including meeting the requirements of medical, pharmacological, chemical and industrial applications. In general the methods used include a physical process. The filtration process of water may reduce the concentration of particulate matter including suspended particles, parasites, bacteria, algae, viruses, fungi; and a range of dissolved and particulate material.

Even though sand filters may be useful for many of these purposes, such sand filters require large space and are difficult and/or time consuming to maintain. Therefore it has been attempted to find other kinds of filters for such purpose. One of the filter types which have been developed is porous membranes such as polymer membranes e.g. of polytetrafluoroethylene or cellulose esters.

There are two main flow configurations of membrane processes: cross-flow and dead-end filtrations. In cross-flow filtration the feed flow is tangential to the surface of the membrane, retentate (liquid and solid parts that do not pass through the filter) is removed from the same side further downstream, whereas the permeate flow is tracked on the other side. In dead-end filtration the direction of the fluid flow is normal to the membrane surface.

Cross-flow filters have been used for filtration of larger amounts of liquids. An example of such a ceramic cross flow filter is described in US20050061735. Such filter however requires a high degree of recirculation and is in many situations very expensive to use and may not provide the desired filtration.

The dead-end filtration process is usually used for gas filtration or for batch-type liquid filtration, where the filtering liquid is relatively slowly fed into the filter membrane, which then allows passage of some particles subject to the driving force. The main disadvantage of a dead-end filtration is the relatively low flow through the filter, the extensive membrane fouling and concentration polarization.

Therefore ceramic dead-end filters have in particular been used in gas-filtration where the amount of particles is relatively low. The ceramic filter further has the beneficial property that it can withstand high temperatures, and accordingly such ceramic filters may be regenerated by burning out captured particles. This kind of filtration is widely used in combustion systems.

Dead-end membrane filters have been used for filtering liquids at small capacities. Such a dead-end ceramic filter is for example described in US 6,227,382. The filter described herein is a dead-end cyst reduction water ceramic filter for gravity flow filtration of water. The filter has a dead-end honeycomb structure, with every second channel open in the water in flow end and every second channel open in the permeate out flow end. The filter has a capacity of 0.3 ml/min/cm³.

Other types of ceramic filters which have been suggested include filters as disclosed in EP 1 607 129. This ceramic filter comprises a porous body having a first and a second end face and an outer periphery. The filter body has a plurality of main flow paths extending from the first to the second end; and filtration membranes arranged on inner wall surfaces of the main flow paths. The fluid to be purified that flows into the main flow paths from opening portions (first opening portions) in the one end face is allowed to permeate the inside of the porous body to thereby purify the fluid, and is taken out as purified fluid from the outer peripheral surface of the porous body. In order to improve regeneration efficiency by back-backwash, diameters of the main flow paths in a cross section perpendicular to a flowing direction of the fluid to be purified are gradually reduced from opening diameters of the first opening portions to opening diameters of opening portions (second opening portions) in the other end face.

The objective of the invention is to provide a novel filter, which can be used for filtering liquids, such as water with a high capacity, high efficiency and which simultaneously is durable and easy to maintain.

This objective has been achieved by the invention as it is defined in the claims. The invention and embodiments thereof are defined in the claims. And as it will be explained below, the invention and embodiments of the invention exhibit further beneficial properties compared with prior art filters and filter systems.

### DISCLOSURE OF INVENTION

According to the invention a ceramic dead-end filter has been provided, which ceramic dead-end filter has shown to be unexpectedly efficient for filtration of liquid. The filter of the invention thus has shown to be capable of filtrating liquids with a very high liquid flux and simultaneously be durable and easy to maintain.

The ceramic dead-end filter of the invention is as defined in the claims. The ceramic dead-end filter comprises at least one ceramic filter membrane having a first side with a front surface and a second side. The ceramic membrane comprises a selective front layer providing the front surface, the selective front layer comprises a maximum pore size diameter of about 25 µm or smaller. The maximum pore size diameter is the largest pore size diameter of the selective front layer. The terms "maximum pore size diameter", "maximum pore size" and "maximum pore" are used interchangeable.

As it will be explained below the maximum pore size should preferably be selected in relation to the fluid and the expected particle sizes in the fluid to be filtrated by the ceramic dead-end filter.

The term 'selective front layer' means the selective front layer which is decisive for the filtration. By the term 'continuous' it is specified that the selective front layer is a continuous layer in the whole extent of the ceramic filter membrane - in other words, the front surface of the ceramic filter membrane does not comprise sections with pore size diameter larger than the maximum pore size diameter of the selective front layer.

The maximum pore size diameter is measured by the Bubble Point Test Method according to ASTM Standard E-128 and the International Organization for Standardization (ISO) test standard 4003.

The bubble point test is based on Darcy's Law to correlate the measured bubble point pressure value to the calculated maximum pore size diameter. This calculated maximum pore is then multiplied by a pore shape correction factor to estimate the filter rating, also known as the "Micron Grade" for rating our products. The wetting fluid used in the bubble point test is selected to be isopropyl alcohol and the test is performed at 25 °C.

The maximum pore size can be selected to be about 20 µm or smaller, such as about 15 µm or smaller, such as about 10 µm or smaller, such as about 5 µm or smaller, such as about 1 µm or smaller, for example between about 0.5 nm and about 25 µm.

The maximum pore size of the ceramic dead-end filter should preferably be selected in relation to the smallest expected particles to be removed from the liquid by filtration. According to the invention it has been found that by construction of the ceramic dead-end filter such that the filtration takes place substantially exclusively on the front surface of the ceramic filter membrane, the ceramic dead-end filter becomes very simple to maintain and can be substantially fully regenerated in a very efficient and fast manner.

The basic idea behind the invention is that particles that pass the selective front layer of the ceramic filter membrane should also pass substantially unhindered through the whole of the ceramic filter membrane and preferably particles that pass the front surface of the selective front layer of the ceramic filter membrane should also pass substantially unhindered through the whole of the ceramic filter membrane. Thereby particles will practically not be captured inside the ceramic filter membrane, and any connected particle "cake" collected on the front surface of the selective front layer can be removed for example by a simple backwash as it will be described further below.

The selective front layer comprises a circular correlated maximum pore size diameter determined by the Bubble Point Test Method, but without multiplying with a correction factor, which is about 25 µm or smaller, such as about 20 µm or smaller, such as about 15 µm or smaller, such as about 10 µm or smaller, such as about 5 µm or smaller, such as about 1 µm or smaller, for example between about 0.5 nm and about 25 µm.

In one embodiment the ceramic filter membrane has a maximum pore size from about 0.1 µm to about 10 µm and the ceramic dead-end filter comprising this ceramic filter membrane is useful for micro filtration.

In one embodiment the ceramic filter membrane has a maximum pore size from about 1 nm to about 100 nm and the ceramic dead-end filter comprising this ceramic filter membrane is useful for ultra filtration.

In one embodiment the ceramic filter membrane has a maximum pore size of less than about 2 nm, such as less than about 1 nm and the ceramic dead-end filter comprising this ceramic filter membrane is useful for nano filtration.

In one embodiment the ceramic filter membrane has a maximum pore size from about 0.9 nm to about 8 nm and the ceramic dead-end filter comprising this ceramic filter membrane is useful for nano filtration.

Generally it is desired to have a relatively high porosity in order to obtain a high liquid flux. However, a too high porosity may result in an unstable structure.

In the present invention the porosity may preferably be at least about 30 % by volume, such as at least about 40 % by volume, such as at least about 50 % by volume, such as at least about 60 % by volume.

The porosity may in one embodiment be determined by visual estimate. In one embodiment the porosity is determined by a mercury porosimetry method for example according to ISO 15901-1:2005.

Mercury porosimetry is a well known and reliable analytical technique used to determine various quantifiable aspects of a material's porous nature, such as pore diameter distribution, total pore volume (porosity) as well as bulk density and absolute density.

The technique involves the intrusion of mercury at differential pressure into a tested material through the use of a porosimeter. The pore size diameter can be determined based on the external pressure needed to force the liquid into a pore against the opposing force of the liquid's surface tension. The differential pressure is step wise increased and as the differential pressure is increased, mercury penetrates the sample's maximum pores first. As the differential pressure is further increased, the mercury begins to penetrate the sample's remaining pores smaller than the maximum pores.

In one embodiment the porosity and/or the pore size distribution is measured by a capillary flow porometer, such as the capillary flow porometer marketed by Porous Materials, Inc (USA).

The porosity accordingly means the active porosity, i.e. pores that are completely closed are not adding to porosity. In one embodiment substantially all pores of the selective front layer are open pores.

A high porosity in a membrane filter does not necessarily mean that a high flux is obtained. For example prior art filters often have a relatively high porosity, but since a large amount of the pore volume is due to pores which are much smaller than the largest pores this large volume of small pores actually may limit the flux and keep it at an undesired level. In the present invention the porosity adds to the desired effect of obtaining a high liquid flux, together with inter alia the structure of the selective front layer.

For stability reasons it is in one embodiment desired that the selective front layer comprises a porosity of up to about 85 % by volume, such as up to about 75 % by volume, such as from about 30 to about 70 % by volume, such as from about 30 to about 70 % by volume, such as from about 40 to about 60 % by volume.

In order to obtain an optimal flux in a selective front layer, it is generally desired that the individual pores are as large as possible but not larger than the largest pore (the maximum pore) of the selective front layer as defined above. By having a relatively large fraction of pores close to but not larger than the maximum pore a very large flux can surprisingly be obtained while still providing an effective filtration.

In one embodiment the selective front layer comprises a pore size diameter distribution such that at least about 50 % by volume of the pores (D-50) have a pore size diameter from about the maximum pore size diameter to about 0.05 times the maximum pore size diameter, such as from about the maximum pore size diameter to about 0.1 times the maximum pore size diameter, such as from about the maximum pore size diameter to about 0.2 times the maximum pore size diameter, such as from about the maximum pore size diameter to about 0.3 times the maximum pore size diameter.

In one embodiment the fraction of relatively large pores is such that at least about 50 % by volume of the pores (D-50) have a pore size diameter from about the maximum pore size diameter to about 0.4 times the maximum pore size diameter, such as from about the maximum pore size diameter to about 0.5 times the maximum pore size diameter.

In one embodiment the selective front layer comprises a pore size diameter distribution such that at least about 75 % by volume of the pores have a pore size diameter from about the maximum pore size diameter to about 0.05 times the maximum pore size diameter, such as from about the maximum pore size diameter to about 0.1 times the maximum pore size diameter, such as from about the maximum pore size diameter to about 0.2 times the maximum pore size diameter, such as from about the maximum pore size diameter to about 0.3 times the maximum pore size diameter.

In one embodiment the selective front layer comprises a pore size diameter distribution such that at least about 90 % by volume of the pores have a pore size diameter from about the maximum pore size diameter to about 0.05 times the maximum pore size diameter, such as from about the maximum pore size diameter to about 0.1 times the maximum pore size diameter, such as from about the maximum pore size diameter to about 0.2 times the maximum pore size diameter, such as from about the maximum pore size diameter to about 0.3 times the maximum pore size diameter.

For example in one embodiment the maximum pore size diameter of the selective front layer is about 5 µm and the volume of the pores have a pore size diameter is relatively high , such that a filter capacity of 80 m³/h can be obtained by an energy consumption by the pump of about 4.5 kWh. Compared with a corresponding sand filter the energy consumption necessary to provide a similar filtering effect is more than 24 kWh. Accordingly the ceramic dead-end filter of the invention may also result in a substantial decrease in energy consumption, which is highly beneficial for the environment.

The thicker the selective front layer, the more resistance a liquid will meet during filtration and the less the flux will be. It is therefore in one embodiment desired that the selective front layer has a thickness of about 10 µm or more, such as about 50 µm or more, such as about 100 µm or more, such as about 200 µm or more, such as up to about 3 mm, such as from about 10 µm to about 1 mm.

The selective front layer should be supported by a supporting layer for providing the strength to the selective front layer.

The selective front layer has a thickness of at least about the maximum pore size to about 100 times the maximum pore size diameter, preferably the selective front layer has a thickness of at least 2 µm.

In one embodiment the selective front layer has selective front layer grain size which is determined visually as the medium grain size at least 10 grains (maximum pore size diameter) in cross sectional cut through the selective front layer. The thickness of the selective front layer is preferably at least 2 µm and preferably when the filter membrane comprises a support layer the thickness of the selective front layer is at most 10 times the selective front layer grain size, such as about 5 times the selective front layer grain size or less.

The total thickness of the ceramic filter membrane will usually be up to about 3 mm, such as of up to about 2 mm, such as from about 50 µm to about 1 mm.

The selective front layer has an extent which is determined as the area of the front surface. The filter area is the 'active' part of the selective front layer - i.e. the part of the selective front layer which is not blocked and therefore can be used for filtering. In most filter designs the extent of the selective front layer and the filter area are substantially identical.

The thickness of the selective front layer may vary over its extent or it may be substantially identical. In most situations it is desired to keep the thickness as small as possible, while simultaneously making it sufficiently thick to provide the desired mechanical strength. Therefore, the selective front layer will in most situations be selected to have a thickness which is substantially identical over its extent.

However, for certain designs it may de desirably e.g. for strength reasons or for production reasons to have a varying thickness of the selective front layer. In one embodiment of the ceramic dead-end filter of the invention the selective front layer has a thickness which varies over its extent from a thinnest point to a thickest point, the variation preferably being up to about 100 %, such as up to about 50 %, such as up to about 20 % determined in relation to its thinnest point.

Selective front layer thicknesses of more than 1 cm is rather unusual, but not excluded.

The ceramic dead-end filter comprises at least one ceramic filter membrane comprising the selective front layer and at least one supporting layer. The main purpose of the supporting layer is to provide mechanical support to the selective front layer. The supporting layer may be non-bonded to the selective front layer, but preferably the supporting layer will be fixed to or integrated with the selective front layer.

For certain ceramic dead-end filters the supporting layer also provides a useful base for producing the selective front layer with the desired maximum pore size diameter.

The supporting layer provides the second side of the ceramic filter membrane.

The supporting layer should preferably be selected such that it does not provide any substantial increase in flow resistance compared with the flow resistance of the selective front layer. The supporting layer may in one embodiment be a layer which is inserted into the ceramic dead-end filter after the ceramic dead-end filter has been sintered. In this situation the supporting layer could in principle be any kind of material with the desired strength.

However, for simplifying the ceramic dead-end filter structure and its production it is preferred that the supporting layer comprises or is constituted by a ceramic porous material.

In one embodiment the supporting layer comprises one or more porous ceramic layers of the same or of one or more different ceramic materials than the selective front layer.

The one or more supporting layers comprises a maximum pore size diameter which is as at least 2 times larger than the maximum pore size diameter of the selective front layer.

By providing a supporting layer pore size diameter which is larger than the maximum pore size diameter of the selective front layer, the ceramic filter membrane will not be clogged by particles from a liquid which is filtered. The reasons for this are among other that the ceramic dead-end filter preferably should be selected for a given liquid, such that the maximum pore size diameter of the selective front layer is sufficiently small to ensure that substantially all particles of the liquid do not pass into the ceramic filter membrane and preferably the particles will not even pass into the selective front layer. Another reason is that even if the ceramic dead-end filter should have been selected such that certain small particles actually pass the selective front layer, these particles will most likely also pass through the supporting layer, in particular if the pores of the supporting layer are substantially larger than in the selective front layer.

Due to the superior properties of the ceramic dead-end filter of the invention, such ceramic dead-end filters may be used in filtering processes which hitherto have not been possible. As an example can be mentioned filtration of pool water, filtration of sea water, filtration of drinking water, filtration of biological liquids, such as blood, urine and cell suspensions.

The porosity of the supporting layer should preferably not be too low since this may result in an increased flow resistance.

In one embodiment the one or more supporting layers comprise a porosity which is equal to or larger than the porosity of the selective front layer, preferably the one or more supporting layers comprise a porosity which is substantially equal to the porosity of the selective front layer.

The ceramic filter membrane may comprise 1, 2, 3 or even more supporting layers. However, for most ceramic dead-end filter it is desired that the ceramic filter membrane comprises 1-2 supporting layers.

In one embodiment the ceramic filter membrane comprises a first supporting layer in contact with the selective front layer and a second supporting layer in contact with the first supporting layer. The first supporting layer may preferably have a maximum pore size diameter which is at least 2 times larger than the maximum pore size diameter of the selective front layer and the second supporting layer may preferably have a maximum pore size diameter which is larger than the maximum pore size diameter of the first supporting layer.

In one embodiment the ceramic filter membrane comprises a first supporting layer in contact with the selective front layer and a second supporting layer in contact with the first supporting layer. The first supporting layer has a porosity which is substantially equal to or larger than the porosity of the selective front layer and the second supporting layer has porosity which is substantially equal to or larger than the porosity of the first supporting layer.

In one embodiment the filter membrane comprises an interface between the selective front layer and a supporting layer. This interface is referred to as a 'supporting layer - selective front layer interface' and it forms a common boundary between the supporting layer and the selective front layer. In one embodiment the supporting layer - selective front layer interface is so thin that a specific thickness cannot be determined. In one embodiment the supporting layer - selective front layer interface has a thickness which is less than about 10 µm, such as less than about 1 µm.

During the production of the ceramic filter membrane, the ceramic grains of the selective front layer may penetrate slightly into the supporting layer and thereby the common boundary between the supporting layer and the selective front layer is provided with a certain thickness rather than a strict line.

In one embodiment where the ceramic filter membrane comprises at least two supporting layers, the filter membrane comprises at least one supporting layer - supporting layer interface forming a common boundary between two different supporting layers, the supporting layer - supporting layer interface preferably having a thickness which is less than about 10 µm, such as less than about 1 µm.

In principle the supporting layers may have any thickness. However, since the supporting layers have no any influence on the quality of the filtration, but only on the stability and strength of the ceramic filter membrane there is generally no reason to make the supporting layer any thicker than the thickness which is sufficient to provide the desired mechanical support.

In one embodiment where the filter membrane comprises one or more supporting layers, the one or more supporting layers, individually of each other comprise a thickness of about 1 µm or more, such as about 10 µm or more, such as about 50 µm or more, such as about 100 µm or more, such as about 200 µm or more, such as up to about 10 mm, such as from about 50 µm to about 5 mm.

In most ceramic dead-end filters the ceramic filter membrane will have only one selective front layer since usually it is known which way through the filter the liquid to be filtered is intended to flow. However, for certain ceramic dead-end filters and/or for certain applications it may be desirable that the ceramic filter membrane comprises two oppositely arranged front surfaces which are front surfaces of respective selective front layers.

Accordingly, in one embodiment the filter membrane comprises a first and a second front surface arranged opposite to each other, where each of the front surfaces comprise a selective front layer providing the respective front surfaces, and each of the selective front layer independently of each other comprises a maximum pore size diameter of about 25 µm or smaller, such as about 20 µm or smaller, such as about 15 µm or smaller, such as about 10 µm or smaller, such as about 5 µm or smaller, such as about 1 µm or smaller, for example between about 0.5 nm and about 25 µm.

In one embodiment the filter membrane comprises a sandwich structure comprising at least one supporting layer sandwiched between a first and a second selective front layer, the selective front layers comprising front surfaces facing away from each other, the front surfaces preferably being substantially parallel. The filter membrane may for example comprise 2, 3 or more supporting layers sandwiched between a first and a second selective front layer.

The ceramic filter membrane may in principle comprise any kind of ceramic, alone or in combinations and optionally in combination with other elements and/or compositions. However, since the ceramic is produced from a mixture comprising ceramic grains, these ceramic grains need to be sintered.

Sintering (sometimes also called "firing") of ceramic materials is a method involving consolidation of ceramic grains by heating a shaped "green" element to a high temperature below the melting point of the ceramic. In this sintering process material of the separate grains may diffuse to neighboring grains. The green element is the shaped but not yet sintered ceramic. Usually the green element is at least partly mechanically compacted.

The driving force of the sintering process is believed to be a reduction of surface energy of the particles caused by decreasing their vapor-solid interfaces. During the diffusion process the pores, taking place in the "green", may diminish or even close up. Care should therefore be taken not to use too high temperatures or to prolong the sintering process too much.

Due to the sintering requirements care should therefore be taken when mixing different ceramics.

In one embodiment the filter membrane comprises one or more ceramic materials selected from ceramic oxides, such as alumina, zirconia, spinel (a combination of magnesium and aluminum oxides), mullite (a combination of aluminum and silicon oxides); ceramic non-oxides, such as carbides, borides, nitrides, silicates and silicides; and combinations and compositions thereof.

The skilled person will understand that other ceramics may be used in the ceramic dead-end filter of the invention alone or in combination.

In situations where the ceramic filter membrane comprises a combination of ceramics, care should be taken that the sintering process of the respective materials can be performed to a desired degree without any of the ceramics thereby being melted, which may cause an undesired closing of pores.

The desired sintering temperature depends on the type and kind of ceramic, on the sintering time and the grain size. Usually a smaller grain size has a lower sintering temperature than a larger grain size.

For most ceramics useful sintering temperatures are from about 800°C to about 2000°C.

Examples of sintering temperatures are shown in table 1.

**Table 1**

| | |
|---|---|
| Zirconia-aluminia (ZrO₂---Al₂O₃) grains | About 1600°C |
| Silicon carbide (SiC) grains | 1700 - 2500°C |
| Alpha alumina (alpha-Al₂O₃) | 1700°C (melting temp 2050°C) |
| Titanium Diboride (TiB₂) | 2000°C |

In one embodiment the filter membrane comprises one or more ceramic materials selected from alumina, zirconia, titania, boron nitride, silica, mullite, silicon carbide (SiC), and combinations thereof.

In one embodiment it is in particular desired that the ceramic filter membrane comprises silicon carbide. Ceramics comprising silicon carbide have very high wear resistance and are further very resistance to both heat and chemicals. Ceramic dead-end filters comprising ceramic filter membranes with silicon carbide are therefore very lasting and can be used for filtering aggressive liquids.

In one embodiment the filter membrane comprises at least one supporting layer, and the supporting layer comprises silicon carbide, such as silicon carbide coated onto ceramic particles of silicon carbide and/or of other ceramic particles such as alumina, zirconia, titania, boron nitride, silica, mullite and combinations thereof.

In one embodiment the selective front layer comprises one or more ceramic materials selected from alumina, zirconia, titania, boron nitride, silica, mullite, silicon carbide (SiC), and combinations thereof.

In one embodiment the filter membrane comprises at least one supporting layer preferably comprising a 3-dimentional network of interconnected voids surrounded by a web, and the web being of a ceramic material.

In one embodiment the filter membrane comprises at least one supporting layer having a first material composition and the selective front layer has a second material composition different from the first material composition. The supporting layer will usually be produced prior to producing the selective front layer, and accordingly it is desired that the ceramic or ceramics of the supporting layer has melting point which is higher than a desired sintering temperature of the ceramic(s) of the selective front layer, such that melting of the supporting layer can be avoided during sintering of the selective front layer.

In one embodiment the ceramic filter membrane may comprise a supporting layer of mainly silicon carbide and a selective front layer of mainly alumina.

In one embodiment the ceramic filter membrane may comprise a supporting layer of mainly titanium diboride and a selective front layer of mainly silicon carbide.

In one embodiment the ceramic filter membrane may comprise a supporting layer of mainly silicon carbide and a selective front layer of mainly a combination of silicon carbide and titanium diboride where the selective front layer is provided from a mixture comprising a first fraction of relatively small grains and a second fraction of relatively large grains, the first fraction being silicon carbide grains and the second fraction being titanium diboride grains.

In one embodiment the filter membrane comprises at least one supporting layer which supporting layer interpenetrates partly into the selective front layer.

Usually the green element of the ceramic filter membrane comprises several other components such as organic and/or inorganic binders, process liquids and etc. During sintering such other components are burned off leaving back the ceramic. After the sintering treatment, however, the ceramic filter membrane may be treated by other components which may e.g. be bonded or other wise fixed to or within the ceramic filter membrane.

In most situations it is desirable that the filter membrane is substantially of ceramic.

In one embodiment the filter membrane is mainly of silicon carbide ceramic, such as at least about 90 % by weight of silicon carbide ceramic, such as at least about 95 % by weight of silicon carbide ceramic, such as at least about 98 % by weight of silicon carbide ceramic.

The amount and type of ceramic in the ceramic filter membrane can for example be determined using resonance spectroscopy (NMR)/ Rahman spectroscopy (non-destructive) and/or mass spectrometry. When using mass spectroscopy the ions which should be generated for performing the determination(s) may be generated in plasma by producing high voltage sparks in vacuum whereby ions from the ceramic filter membrane are generated.

As indicated above the selective front layer is preferably obtained from a green element comprising grains of ceramic(s). The method of production is described further later on.

In one embodiment the selective front layer comprises grains of ceramic obtained from sintering ceramic particles, such as ceramic particles having a medium grain size (D-50) of up to about 80 µm, such as from about 60 µm to about 0.1 µm, such as from about 40 µm to about 0.5 µm.

The medium grain size (D-50) is the grain size where about 50 % by volume of the grains have a grain size smaller or equal to.

The grain band of the silicon carbide grains preferably are narrow such that for example 90 % by volume or more of the grains are within about 0.5 and about 2 times the medium grain size. The grain size is determined in accordance with ISO 8486-1 :1996 -Bonded abrasives - (determination and designation of grain size distribution - Part I: Macrogrits F4 to F220), ISO 8486-2:1996- Bonded abrasives - (Determination and designation of grain size distribution - Part 2: Microgrits F230 to F1200) and/or, JAPANESE INDUSTRIAL STANDARD JIS R6001(1998) (Abrasive Grain Size Distribution).

In one embodiment the selective front layer comprises grains comprising silicon carbide, the silicon carbide comprising grains preferably being obtained from sintering a ceramic precursor comprising a first ceramic material with a first medium grain size (C1 - D-50) and a second ceramic material with a second medium grain size (C2 - D-50), the second ceramic material consisting essentially of silicon carbide and the second medium grain size (C2 - D-50) being substantially smaller than the first medium grain size (C1 - D-50), preferably the size ratio C1 - D-50 to C2 - D-50 being from about 10:1 to about 2:1, such as from about 6:1 to about 2:1, such as from about 4:1 to about 2.5:1. The second ceramic material may for example consist essentially of α-silicon carbide and the second medium grain size (C2 - D-50) may be up to about 5 µm, such as from about 2 µm to about 0.01 µm, such as from about 1 µm to about 0.1 µm,

In one embodiment the supporting layer comprising grains of ceramic obtained from sintering ceramic particles, such as ceramic particles having a medium grain size (D-50) of up to about 100 µm, such as from about 80 µm to about 0.1 µm, such as from about 50 µm to about 1 µm, such as from about 25 µm to about 2 µm.

In one embodiment the supporting layer comprising grains preferably being obtained from sintering a ceramic precursor comprising a first ceramic material with a first medium grain size (C1 - D-50) and a second ceramic material with a second medium grain size (C2 - D-50), the second ceramic material consisting essentially of silicon carbide and the second medium grain size (C2 - D-50) being substantially smaller than the first medium grain size (C1 - D-50), preferably the size ratio C1 - D-50 to C2 - D-50 being from about 10:1 to about 2:1, such as from about 6:1 to about 2:1, such as from about 4:1 to about 2.5:1.

The second ceramic material may for example consist essentially of α-silicon carbide and the second medium grain size (C2 - D-50) is up to about 25 µm, such as from about 10 µm to about 0.1 µm, such as from about 5 µm to about 1 µm.

Ceramic filter membranes obtained from ceramic(s) of the above mentioned grain size or fractions of grain size have shown to result in very effective ceramic filter membrane with maximum pore size as disclosed above and with a high flux.

In a preferred embodiment of the invention the ceramic filter membranes comprise recrystallized α-silicon carbide. The recrystallized α-silicon carbide can be visually detected since it tends to spread onto other ceramic grains e.g. neighboring grains.

As mentioned above the ceramic filter membrane may comprise additional non-ceramic material, which is added/fixed to the ceramic filter membrane after sintering.

In one embodiment the ceramic filter membrane comprises an active component or a precursor for an active component, the active component or precursor therefore preferably being coated onto the ceramic filter membrane, immobilized to the ceramic filter membrane, integrated or incorporated into the ceramic filter membrane.

In principle any desired active component, such as single components, compositions of components and elements with active component(s) may be used. Methods such as plasma methods, and/or vapor deposition methods and/or supercritical CO₂ methods of adding/fixing such active component into and/or onto porous structures are well known to the skilled person and will not be disclosed further herein.

In one embodiment the ceramic filter membrane comprises an active component or precursor therefore selected from catalytic components, such as platinum and platinum compositions; organic components, such as enzymes; and/or ion exchanger components such as ion-exchange resin beads.

The ceramic dead-end filter may comprise 1, 2, 3, 4 or even more ceramic filter membranes.

In one embodiment the ceramic dead-end filter comprises two or more, identical or different ceramic filter membranes.

In one embodiment the ceramic dead-end filter comprises merely one single, ceramic filter membrane.

The ceramic dead-end filter may in principle have any shape, provided that it can be applied as a dead-end filter.

The ceramic dead-end filter may preferably comprise a house into which the one or more ceramic filter membranes are fixed. The one or more ceramic filter membranes may be fixed in any way e.g. mechanically fixed. The ceramic dead-end filter house may for example comprise an O-ring for providing an optionally elastic sealing between the house and the ceramic filter membrane. Such fixing may be very stable. In another or the same embodiment the house comprises one or more projecting parts, one or more rims and/or one or more flanges by use of which the ceramic filter membrane(s) is fixed in the house.

In one embodiment the ceramic dead-end filter is shaped as a disc and/or as a vessel. In this embodiment the one or more ceramic filter membranes may preferably constitute all or a part of the disc and/or of the vessel.

In one embodiment the ceramic dead-end filter comprises a house and the one or more ceramic filter membranes are shaped as discs which are fixed in the house.

In one embodiment the ceramic dead-end filter comprises a house and the one or more ceramic filter membranes are shaped as vessels which are fixed in the house.

In one embodiment the ceramic dead-end filter comprises at least one elongated closed end inflow channel comprising a channel wall provided totally or partly by one or more ceramic filter membranes. The one or more ceramic filter membranes comprise a selective front layer facing the inside of the elongated closed end inflow channel.

In one embodiment the ceramic dead-end filter comprises a plurality of elongated closed end inflow channels, each of the dead-end inflow channels comprise a channel wall provided totally or partly of one or more ceramic filter membranes. The one or more ceramic filter membranes comprise a selective front layer facing the inside of the respective elongated closed end inflow channels. The elongated closed end inflow channels preferably are arranged with a distance to each other such that a liquid can pass through the one or more ceramic filter membranes of the elongated closed end inflow channels.

Ceramic dead-end filters with the inflow channel structure can generally be very compact and accordingly have a large filter area relative to its size. The ceramic dead-end filter of the present invention may accordingly be provided as a very compact filter, while still having a flux which is superior to prior art filters.

In one embodiment the ceramic dead-end filter comprises at least one outflow path arranged such that liquid can flow from the inflow channels crossing at least one ceramic filter membrane and out via the outflow path.

The outflow path may in principle have any design and length. Generally it is decided that the outflow path should be designed such that it does not result in a substantial increase of flow resistance compared with the flow resistance over the ceramic filter membrane.

In one embodiment the ceramic dead-end filter comprises at least one elongated closed end outflow channel arranged such that liquid can flow from the inflow channel crossing at least one ceramic filter membrane and out via the outflow channel.

In one embodiment the at least one elongated closed end outflow channel is arranged in axial continuation of at least one inflow channel. For example the closed end of the inflow channel and the closed end of the outflow channel may be coincident. In this embodiment where the at least one elongated closed end outflow channel is arranged in axial continuation of at least one inflow channel the at least one inflow channel the and the outflow channel may preferably be in liquid communication with an otherwise closed chamber (closed except for the passage over one or more membranes) such that liquid can flow from the inflow channel crossing at least one ceramic filter membrane and into the outflow channel from where it can exit the ceramic filter. This otherwise closed chamber may for example be provided by an inner wall of a ceramic dead-end filter house.

In one embodiment the at least one elongated closed end outflow channel is arranged in displaced arrangement with the at least one inflow channel, such that liquid flowing through the wall of the inflow channel must pass via one or more semi-closed chambers to arrive in the outflow channel from where it can pass out of the ceramic filter. This semi closed chamber may for example be provided by an inner wall of a ceramic dead-end filter house.

In one embodiment the ceramic dead-end filter comprises a plurality of elongated closed end outflow channels arranged in side-by-side relationship with the elongated closed end inflow channels. Each of the elongated closed end outflow channels comprise a channel wall provided totally or partly of one or more ceramic filter membranes shared with one or more of the dead-end inflow channels, such that a liquid can pass through the one or more ceramic filter membranes of the elongated closed end inflow channels and into one or more of the elongated closed end outflow channels.

In the embodiment where the ceramic dead-end filter comprises side-by-side inflow and outflow channels, the elongated closed end inflow channels may preferably be placed in side-by-side relationship with the elongated closed end outflow channels such that their respective closed ends are in opposite ends of the respective channels with respect to the one or more shared ceramic filter membranes.

In one embodiment the elongated closed end inflow channels each comprise an inflow end and a closed end and an inflow channel length extending from the inflow end to the closed end. The inflow ends of the elongated closed end inflow channels are preferably arranged in a common inflow plane. The closed ends of the elongated closed end inflow channels are preferably arranged in a common inflow channel closed end plane.

In one embodiment the elongated closed end outflow channels each comprise an outflow end and a closed end and an outflow channel length extending from the outflow end to the closed end. The outflow ends of the elongated closed end outflow channels are preferably arranged in a common outflow plane. The closed ends of the elongated closed end outflow channels are preferably arranged in a common outflow channel closed end plane.

The closed ends of the elongated closed end outflow channels may in the above embodiment preferably be arranged closer to the common inflow plane than to the common inflow channel closed end plane. In principle it is desired that the inflow channel length and the outflow channel length are substantially identical, all though the invention does not exclude embodiments where they are not identical.

In the embodiment where the ceramic dead-end filter comprises side-by-side inflow and outflow channels, it may further be desired that the distance between the common inflow plane and the common outflow plane is as large as possible, such as at least about 50 %, such as at least about 75 %, such as at least about 85 % of the shorter of the inflow channel length and the outflow channel length.

In one embodiment the elongated closed end inflow channels and the elongated closed end outflow channels are arranged in a honeycomb structure, preferably each of the elongated closed end inflow channels sharing channel wall provided totally or partly of one or more ceramic filter membranes with at least one of the elongated closed end outflow channels, preferably with two or more of the elongated closed end outflow channels, such as with 3, 4, 5 or 6 or more of the elongated closed end outflow channels.

Ceramic filters with closed end honeycomb structure are for example known from gas exhaust filters, such as the gas exhaust filter described in US 7,112,233. The ceramic dead-end filter of the invention may have an overall channel structure as it is known from the ceramic gas exhaust filters, however adapted to the application of filtering liquids and with the ceramic filter membrane as described above.

In one embodiment all of the walls of the elongated closed end outflow channels are provided by one or more ceramic filter membranes, which filter membrane walls are shared with walls of elongated closed end outflow channels.

In one embodiment the ceramic dead-end filter comprises a plurality of elongated channels comprising filter walls of one or more of the ceramic filter membranes,. The channels are arranged in a honeycomb structure and with a filter inflow end and a filter outflow end, wherein the elongated channels comprise a plurality of elongated closed end inflow channels and a plurality of elongated closed end outflow channels where each of the elongated closed end inflow channels share filter wall with elongated closed end outflow channels and where each of the elongated closed end inflow channels comprise a closed end and each of the elongated closed end outflow channels comprise a closed end, the closed end of the elongated closed end outflow channels being closer to the filter inflow than the closed end of the elongated closed end inflow channels.

For simplifying production the elongated closed end inflow channels may preferably be arranged in a substantially parallel relation to each other. In one embodiment the elongated closed end inflow channels and the elongated closed end outflow channels are arranged in a substantially parallel relation to each other.

In one embodiment of the ceramic dead-end filter of the invention where the ceramic dead-end filter comprises side-by-side inflow and outflow channels, each of the elongated closed end inflow channels comprise an inflow end and a closed end and an inflow channel length extending from the inflow end to the closed end. The elongated closed end outflow channels each comprise an outflow end and a closed end and an outflow channel length extending from the outflow end to the closed end, each of the elongated closed end inflow channels comprise a decreasing cross-sectional area from its inflow end and towards its closed end, preferably each of the elongated closed end outflow channels comprise an increasing cross-sectional area from its closed end and towards its outflow end.

By providing the ceramic dead-end filter with side-by-side inflow and outflow channels comprising a varying cross sectional area along their respective length, the pressure drop (often referred to as 'head loss') may be modified. The optimal structure depends largely on the application of the ceramic dead-end filter and in order to find such optimal design, the skilled person will have to perform a few experiments using ceramic dead-end filter with side-by-side inflow and outflow channels with different variations in cross sectional area along their respective length.

In one embodiment each of the elongated closed end inflow channels comprise an inflow end and a closed end and an inflow channel length extending from the inflow end to the closed end, and wherein the elongated closed end outflow channels each comprises an outflow end and a closed end and an outflow channel length extending from the outflow end to the closed end. Each of the elongated closed end inflow channels comprises a substantially constant cross-sectional area from its inflow end and towards its closed end, preferably each of the elongated closed end outflow channels comprises a substantially constant cross-sectional area from its closed end and towards its outflow end. This embodiment is relatively simple to shape.

The channel or channels of the ceramic dead-end filter comprising at least one inflow and or outflow channel may in principle have any length, but for most applications it is desirable that the length is up to about 200 cm. In case larger filters could be desired it is often better to use two or more ceramic dead-end filters in side-by-side operation instead.

In one embodiment each of the elongated closed end inflow channels comprise an inflow end and a closed end and an inflow channel length extending from the inflow end to the closed end, and wherein the elongated closed end outflow channels each comprise an outflow end and a closed end and an outflow channel length extending from the outflow end to the closed end, the inflow channel length and the outflow channel length independently of each other being at least about 5 mm, such as at least about 10 mm, such as at least about 5 cm, such as at least about 10 cm, such as from about 5 cm to about 200 cm.

The channel or channels of the ceramic dead-end filter comprising at least one inflow and or outflow channel may have any cross-sectional area, but for practical reasons and in order not to take up unnecessary space it is generally desired that the cross-sectional area may be up to about 25 cm².

In one embodiment each of the elongated closed end inflow channels comprise an inflow end and a closed end and an inflow channel length extending from the inflow end to the closed end, and wherein the elongated closed end outflow channels each comprise an outflow end and a closed end and an outflow channel length extending from the outflow end to the closed end. Each of the elongated closed end inflow channels comprise an average cross-sectional area of at least about 0.1 mm², such as at least about 1 mm², such from about 2 mm² to about 1 cm², such as up to about 5 cm², such as up to about 10 cm², such as up to about 25 cm².

In one embodiment each of the elongated closed end inflow channels comprise an inflow end and a closed end and an inflow channel length extending from the inflow end to the closed end, and wherein the elongated closed end outflow channels each comprise an outflow end and a closed end and an outflow channel length extending from the outflow end to the closed end. Each of the elongated closed end outflow channels comprise an average cross-sectional area of at least about 0.1 mm², such as at least about 1 mm², such from about 2 mm² to about 1 cm², such as up to about 5 cm², such as up to about 10 cm², such as up to about 25 cm².

In one embodiment each of the elongated closed end inflow channels comprise an inflow end and a closed end and an inflow channel length extending from the inflow end to the closed end, and wherein the elongated closed end outflow channels each comprise an outflow end and a closed end and an outflow channel length extending from the outflow end to the closed end. Each of the elongated closed end inflow channels and each of the elongated closed end outflow channels independently of each other comprise a maximum cross-sectional dimension which is at least about 100 µm, such as at least about 0,5 mm, such as from about 1 mm to about 5 cm, such as up to about 1 cm.

The channel or channels of the ceramic dead-end filter comprising at least one inflow and/or outflow channel may have any shape such as round, oval, square, rectangular, pentagular and hexagular. In situations where the channels are arranged in a honeycomb structure, the shapes of the individual channels are most often determined by this structure.

In one embodiment each of the elongated closed end inflow channels comprise an inflow end and a closed end and an inflow channel length extending from the inflow end to the closed end, and wherein the elongated closed end outflow channels each comprise an outflow end and a closed end and an outflow channel length extending from the outflow end to the closed end. Each of the elongated closed end inflow channels and each of the elongated closed end outflow channels comprise a maximum cross-sectional dimension, the length of the respective elongated closed end inflow and outflow channels being at least about 10 times longer, such as at least 50 times longer, such as from about 60 times longer to about 700 times longer than its largest cross-sectional dimension.

In one embodiment the ceramic dead-end filter comprises a filter fluid volume of up to about 200 L, the filter fluid volume preferably being from about 0.1 L to about 15 L.

The filter fluid volume is the volume of the inflow channel(s) or if the filter has no inflow channels the filter fluid volume is the volume of the ceramic inflow section of the filter i.e. upfront the ceramic filter membrane(s).

In one embodiment the one or more ceramic filter membranes of the dead-end filter comprise a total filter area determined as the filter area of the ceramic filter membrane if there is only one ceramic filter membrane and determined as the sum of the filter area of the ceramic filter membranes if there are 2 or more ceramic filter membranes. Preferably the total filter area is at least about 0.1 cm², such as at least about 1 cm², such as at least about 5 cm², such as at least about 10 cm², such as at least about 100 cm², such as at least about 1 m², such as from about 0.1 cm² to about 50 m².

A highly beneficial property of the ceramic dead-end filter of the invention is that it is possible to provide the ceramic dead-end filter with a very compact structure while still obtaining a very high flux through the filter.

In one embodiment the ceramic dead-end filter comprises a filter fluid volume and the one or more ceramic filter membranes of the dead-end filter comprise a total filter area, the total filter area is at least about 0.1 m² per L filter fluid volume, such as at least about 0.5 m² per L filter fluid volume, such as at least about 1 m² per L filter fluid volume, such as at least about 5 m² per L filter fluid volume.

In one embodiment the total filter area is at least about 0.04 m² per L filter fluid.

In general it is desired that the flux of the filter should be as high as possible in order to allow a fast filtering process using a filter which is as compact as possible. The flux is the amount of liquid per total filter area which passes through the filter per hour. The driving force is the pressure difference over the filter, delta P. The flux for a filter is usually measured as the primed water flux, i.e. the filter has been wetted prior to performing the determination.

The primed water flux is herein determined as the amount of tap water per hour, per m² filter area. The pressure difference delta P is selected such that the flux during determination/measuring is a linear function to the pressure difference. If the flux is too high, a further increase in pressure difference results in a non-linear function with regards to the flux. To operate in the area with non-linear function between flux and delta P is typically unfavorable with regard to the running costs of a filtration system. For optimal use of the pumping effect the system should therefore preferably be operable at a pressure difference where flux/delta P is substantially constant.

In the following flux is defined to include the term /bar pressure difference.

In one embodiment the ceramic dead-end filter comprises a ceramic filter membrane structure with a sufficiently low resistance to allow a primed water flux of at least about 1 m³/(h*m²*bar), measured at 25 °C and at a pressure difference where delta P is a linear function to the flux, preferably the primed water flux is at least about 2 m³/(h*m²*bar), such as at least about 5 m³/(h*m²*bar), such as at least about 20 m³/(h*m²*bar), such as up to about 100 m³/(h*m²*bar), such as from about 1 m³/(h*m²*bar) to about 55 m³/(h*m²*bar).

Even when the maximum pore size diameter of the selective front layer is relatively small the ceramic dead-end filter of the present invention may have a surprisingly and highly unexpected high flux.

In one embodiment wherein the selective front layer comprises a maximum pore size diameter of about 500 nm or smaller the ceramic dead-end filter comprises a ceramic filter membrane structure with a sufficiently low resistance to allow a primed water flux of about 1 m³/(h*m²*bar) measured at 25 °C and at a pressure difference where delta P is a linear function to the flux, preferably the primed water flux is at least about 2 m³/(h*m²*bar), such as at least about 5 m³/(h*m²*bar), such as at least about 20 m³/(h*m²*bar), such as up to about 100 m³/(h*m²*bar), such as from about 1 m³/(h*m²*bar) to about 55 m³/(h*m²*bar).

The invention also relates to a filter system comprising a ceramic dead-end filter as described above.

The filter system of the invention comprises a ceramic dead-end filter as claimed, a feeding pipe for feeding liquid into the ceramic dead-end filter and/or a permeate pipe for withdrawing filtered liquid and at least one liquid pump connected to the feeding pipe and/or to the permeate pipe.

In one embodiment wherein the ceramic dead-end filter comprises a filter inflow end and a filter outflow end, the liquid pump is arranged to provide a pressure difference over the ceramic dead-end filter to provide a liquid flow from the filter inflow end to the filter outflow end.

The filter system may comprise one or more pumps for operating the system. The one or more pumps may in principle be arranged in any configuration such as known by the skilled person.

The liquid pump (or pumps) is in one embodiment preferably capable of providing a pressure difference over the ceramic dead-end filter to provide a liquid flow from the filter inflow end to the filter outflow with a primed water flux of at least about 1 m³/(h*m²*bar), measured at 25 °C and at a pressure difference where delta P is a linear function to the flux, preferably the primed water flux is at least about 2 m³/(h*m²*bar), such as at least about 5 m³/(h*m²*bar), such as at least about 20 m³/(h*m²*bar), such as up to about 100 m³/(h*m²*bar), such as from about 1 m³/(h*m²*bar) to about 55 m³/(h*m²*bar).

In one embodiment wherein the ceramic dead-end filter comprises a filter inflow end and a filter outflow end, the filter system comprises a liquid pump arranged to provide a pressure difference over the ceramic dead-end filter to provide a liquid backwash from the filter outflow end to the filter inflow end.

It is generally known to use backwash in filter systems. However, for the ceramic dead-end filter of the invention it has been found that due to the structure of the ceramic filter membrane a backwash for regenerating the ceramic dead-end filter is extremely effective and can be performed in a highly economical way. In practice a backwash as short as 3-4 seconds has shown to have at least certain effect.

The backwash may be arranged to be performed by any pump of the filter system and using any liquid in backwash, such as permeate, tap water or other liquid.

In one embodiment the liquid pump is preferably capable of providing a pressure difference over the ceramic dead-end filter to provide a liquid backwash flow from the filter outflow end to the filter inflow end which liquid backwash has a primed water flux of at least about 1 m³/(h*m²*bar), measured at 25 °C and at a pressure difference where delta P is a linear function to the flux, preferably the primed water flux is at least about 2 m³/(h*m²*bar), such as at least about 5 m³/(h*m²*bar), such as at least about 20 m³/(h*m²*bar), such as up to about 100 m³/(h*m²*bar), such as from about 1 m³/(h*m²*bar) to about 55 m³/(h*m²*bar).

In order to increase the cleaning effect of the backwash it has been found that a mechanical influence provided by a gas backwash has a very beneficial effect.

In one embodiment the filter system comprises a ceramic dead-end filter, a feeding pipe for feeding liquid into the ceramic dead-end filter and/or a permeate pipe for withdrawing filtered liquid and at least one liquid pump connected to the feeding pipe and/or to the permeate pipe, the filter system further comprises a gas feeding pipe connected to the filter system to feed a gas in backwash through the ceramic dead-end filter, the filter system preferably being arranged to provide the gas backwash as the only flow or simultaneously with the liquid backwash or simultaneously with a chemical liquid backwash.

In one embodiment the system comprises a filtering mode and a cleaning mode. The filtering system may be manually operated to switch through the modes, but preferably the filter preferably comprises an operating system for automatically switching between the filtering mode and the cleaning mode.

In one embodiment the filtering system comprises an operating system regulating the pressure difference provided over the filter and determining the pressure drop over the ceramic dead-end filter in relation to the liquid flow, the operating may preferably be arranged such that it is set to switch the system to a cleaning mode when the pressure drop over the ceramic dead-end filter exceeds a pre-set level such as a pre-set level in relation to the initial pressure difference.

The filtering system and its regulating elements, such as valves and pumps may for example be pneumatic operable and/or electrically operated.

The filtering system may be arranged to operate using vacuum as driving force (vacuum operating) or using pressure as driving force (pressure operating). In practice the question of vacuum operating or pressure operating depend on on which side of the filter the driving pump is place in relation to the flow direction through the filter. If the filter system is arranged to be vacuum operating the maximal pressure difference will usually be up to 1 atmosphere, whereas if the filter system is arranged to be pressure operating the maximal pressure difference is set by the pump.

In one embodiment the operating mode comprises at least one of a liquid backwash, a permeate backwash, a tap water backwash, a chemical liquid backwash and a gas backwash. In one embodiment the cleaning mode preferably comprises in mentioned order, a gas backwash, a chemical liquid backwash and a permeate backwash.

The chemical liquid used in the chemical liquid backwash may be any kind of liquid with a cleaning chemical. Such compositions are well known and will not be described in detail herein.

In one embodiment the filter system comprises at least one filtering mode, a cleaning mode and a non-operating mode. The operating system is preferably arranged to automatically switch between the modes. The operating system is preferably arranged to automatically switch from the cleaning mode to the filtering mode after a pre-set cleaning period and/or in response to drop in pressure difference over the ceramic filter.

The invention also relates to a method of filtering liquid through a ceramic dead-end filter as described above. The method of filtering comprises operating the ceramic dead-end filter in alternating modes comprising a filtering mode and a cleaning mode, wherein the liquid is filtered through the ceramic dead-end filter in one or more of the filtering modes.

In one embodiment the ceramic dead-end filter is operated in the filtering mode for a first period, followed by being operated in the cleaning mode. The first period may preferably be a preset period or a period determined in dependence of a change in pressure drop over the ceramic dead-end filter.

In one embodiment the cleaning mode comprises passing a gas in backwash through the ceramic dead-end filter. The gas backwash may preferably have a velocity sufficiently high to influence the ceramic dead-end filter mechanically, the flow preferably being at least about 1 m³/h^{*}m², such as at least about 5 m³/(h*m²), such as at least about 25 m³/(h*m²), such as at from about 1 to about 200 m³/(h*m²) measured at 25 °C, the gas preferably being air.

The gas backwash and the liquid backwash may in one embodiment be used in an alternating fashion for increasing the cleaning effect. The skilled person will be able to determine an optimal tile and order of the flow and backwash in the cleaning mode for a specific filtering process.

In one embodiment the cleaning mode comprises passing a chemical liquid in ordinary flow and/or in backwash through the ceramic dead-end filter. As mentioned above any chemical liquid may be used. In one embodiment the chemical liquid comprises a pH regulating agent and/or a surfactant, such as a detergent.

In one embodiment the cleaning mode comprises passing a liquid such as permeate, tap water or another liquid in backwash through the ceramic dead-end filter to remove dirt from the ceramic dead-end filter. The liquid backwash should preferably have a velocity sufficiently high to carry dirt out of the ceramic dead-end filter The flow may for example be at least about 1 m³/(h*m²), such as at least about m³/(h*m²), such as at least about 25 m³/(h*m²), such as at from about 1 to about 200 m³/(h*m²) measured at 25 °C.

In one embodiment the ceramic dead-end filter is operated in the filtering mode for a first period, followed by being operated in a cleaning mode. The cleaning mode comprises flowing a gas in backwash through the ceramic dead-end filter, flowing chemical liquid in ordinary flow and/or in backwash through the ceramic filter and flowing liquid (such as permeate and/or tap water) in backwash through the ceramic dead-end filter. After the cleaning mode the ceramic dead-end filter may preferably be switched to operate in filter mode.

In one embodiment the ceramic dead-end filter is operated in the cleaning mode for a period of from about 2 seconds to about 60 minutes. For certain application it has been found that a relatively small backwash is sufficient such as a liquid backwash performed for a period sufficient to obtain a total liquid backwash volume corresponding to the liquid volume of the ceramic dead-end filter.

In one embodiment the liquid backwash is performed for at least a period sufficient to obtain a total liquid backwash volume corresponding to the liquid volume of the ceramic dead-end filter. The liquid backwash period may preferably be at least about 2 seconds, such as at least about 5 seconds, such as at least about 1 minute, such as from about 2 minutes to about 60 minutes

In one embodiment the ceramic dead-end filter is operated in the cleaning mode for a period sufficient to clean the ceramic dead-end filter. The backwash is preferably performed for at least about 2 seconds, such as at least about 5 seconds, such as at least about 1 minute, such as from about 2 minutes to about 60 minutes.

In the nature of dead-end filtration, particles are retained in the selective front layer of the ceramic filter membrane. Depending on the concentration of particles and sizes hereof, the demand for cleaning the filter arises. This is due to the fact that the filtration area decreases when the particles build up. The front face of the selective front layer will eventually be filled with particles and stop performing.

To avoid a situation with unsatisfying filtration performance, the filter can be backwashed as described above at suitable frequency. Monitoring the pressure difference over the dead-end ceramic filter is a well known parameter to determine an appropriate time to do a backwash. Depending on the application, a suited moment to perform a backwash could for example be defined as the condition where the pressure difference over the filter is increased by a certain percentage e.g. about 25% from filtration start. The backwash frequency can also be time dependent or volume of permeate dependent.

A backwash can be performed by different techniques as described above. The filter can be cleaned by reversing the flow, i.e. with a pump forcing permeate in reverse direction through the outflow channel and wash the particles out of the inflow channel(s). The contaminated liquid may preferably be guided to a drain/waste or filtered with a second membrane unit. The backwash with water/permeate may preferably be continued until the pressure difference again is at a satisfying level.

Another type of backwash uses a gas as described above to release and optionally fully or partly remove the particles in the inflow channel. Filtration mode is stopped, and gas is blown through the outflow channel forcing liquid and particles out of the inflow channel. Gas may for example be blown until the pressure difference again is at a satisfying level and/or the released particles are removed by a liquid backwash.

As mentioned above chemicals in a chemical liquid can also be used to improve the backwash efficiency. Filtration mode is stopped, and the chemical liquid is forced through the filter, either with the same feed pump or with a secondary pump. The chemical liquid may for example be circulated until the pressure difference again is at a satisfying level and/or the chemical cleaning mode may be combined with gas backwash and/or permeate/water backwash. The filter is preferably rinsed with either tap water or permeate after a chemical cleaning.

The invention also relates to a method of producing a ceramic dead-end filter as described above. The method of producing a ceramic dead-end filter comprises providing a homogeneous front layer dispersion of ceramic precursor, shaping the front layer dispersion to provide at least a green selective front layer and drying and sintering the green selective front layer at an increased temperature.

In one embodiment the method of producing a ceramic dead-end filter further comprises providing one or more support layers and applying the front layer dispersion onto the support layer.

The composition and the structure of the ceramic dead-end filter and the ceramic filter membrane are described above.

The front layer dispersion comprises ceramic grains, binder and other element such as the composition described for a cross flow ceramic membrane in US 2006/0236668 hereby incorporated by reference.

In one embodiment the front layer dispersion comprises at least ceramic grains and organic binder. The ceramic grains may preferably comprise two or more grain fractions comprising a first ceramic grain fraction with a first medium grain size (C1 - D-50) and a second ceramic grain fraction with a second medium grain size (C2 - D-50). The second ceramic grain fraction may preferably consist essentially of silicon carbide and the second medium grain size (C2 - D-50) is preferably substantially smaller than the first medium grain size (C1 - D-50). The size ratio C1 - D-50 to C2 - D-50 may preferably be from about 10:1 to about 2:1, such as from about 6:1 to about 2:1, such as from about 4:1 to about 2.5:1.

The grain sizes and the ration of the grain fractions have influence on the final maximum pore size of the selective front layer. Also the sintering temperature has influence and may preferably be selected as described in US 2006/0236668. The skilled person can produce a ceramic dead-end filter with a desired maximum pore size by performing a few experiments and from these determining the grain sizes, the sintering temperature and etc.

In one embodiment the second ceramic grain fraction consists essentially of α-silicon carbide and the second medium grain size (C2 - D-50) is up to about 20 µm, such as up to about 10 µm, such as up to about 5 µm, such as from about 2 µm to about 0.01 µm, such as from about 1 µm to about 0.1 µm,

In one embodiment the method comprises providing a ceramic support layer and applying the front layer dispersion onto the support layer. The ceramic support layer may preferably be provided by a method comprising providing a homogeneous support layer dispersion of ceramic precursor, shaping the support layer dispersion to provide at least a green support layer and drying and sintering the green support layer at an increased temperature. The support layer dispersion preferably is in the form of a paste and the support layer preferably is shaped by extrusion.

The support layer dispersion may preferably be as described above for the selective front layer dispersion but with the difference that the grain sizes of the support layer dispersion are larger than the grain sizes of the selective front layer dispersion. Also the support layer dispersion may preferably be a paste whereas the selective front layer dispersion preferably has a much lower viscosity than the support layer dispersion. Further information about the dispersions can be found in US 2006/0236668.

In one embodiment the support layer dispersion comprises at least ceramic grains and organic binder, the ceramic grains preferably comprising two or more grain fractions comprising a first ceramic grain fraction with a first medium grain size (C1 - D-50) and a second ceramic grain fraction with a second medium grain size (C2 - D-50), the second ceramic grain fraction consisting essentially of silicon carbide and the second medium grain size (C2 - D-50) being substantially smaller than the first medium grain size (C1 - D-50), preferably the size ratio C1 - D-50 to C2 - D-50 being from about 10:1 to about 2:1, such as from about 6:1 to about 2:1, such as from about 4:1 to about 2.5:1.

In one embodiment the second ceramic grain fraction consists essentially of α-silicon carbide and the second medium grain size (C2 - D-50) is up to about 25 µm, such as from about 10 µm to about 0.1 µm, such as from about 5 µm to about 1 µm,

In one embodiment the method comprises recrystallizing small α-silicon carbide grains onto large ceramic grains optionally comprising silicon carbide.

### BRIEF DESCRIPTION OF DRAWINGS

The invention will be explained more fully below in connection with a preferred embodiment and with reference to the drawings in which:
FIG. 1 is a principal sketch of a dead-end filter.
FIG. 2 is a principal sketch of a dead-end filter of the invention.
FIG. 3 shows a polished layer of a ceramic filter membrane of a ceramic dead-end filter of the invention at about 240-fold magnification.
FIG. 4 shows a disc shaped membrane of a ceramic dead-end filter of the invention.
FIG. 5 is a schematic illustration of a single channel ceramic dead-end filter of the invention.
FIG. 6 is a cross-sectional view of a multi channel ceramic dead-end filter of the invention.
FIGs. 7a and 7b show a honeycomb shaped channel ceramic dead-end filter of the invention.
FIG. 8 shows a principal sketch of a dead-end filtration process using a honeycomb shaped channel ceramic dead-end filter of the invention.
FIGs. 9a and 9b are schematic illustrations of a ceramic dead-end filter of the invention mounted in a filter house. FIG. 9a is a side view of the ceramic dead-end filter and FIG. 9b illustrates a part of cross-sectional view of the mounted ceramic dead-end filter.
FIGs. 10a - 10d are schematic illustrations of a ceramic dead-end filter of the invention prepared to be mounted in a not shown filter house. FIG. 10a is a side view of the ceramic dead-end filter, FIG. 10b illustrates a part of cross-sectional view of the ceramic dead-end filter. FIG. 10c is an end view of the ceramic dead-end filter and FIG. 10c is a perspective view of the ceramic dead-end filter.
FIG. 11 is a perspective illustration of a conical, single channel ceramic dead-end filter of the invention.
FIG. 12 is a schematic illustration of a liquid flow in a ceramic dead-end filter of the invention.
FIG. 13 is a schematic illustration of a filter system of the invention comprising a ceramic dead-end filter operating in filtration mode.
FIG. 14 is a schematic illustration of a single pump filter system of the invention comprising a ceramic dead-end filter operating in cleaning mode.
FIG. 15 is a schematic illustration of a multi pump filter system of the invention comprising a ceramic dead-end filter operating in cleaning mode and comprising a chemical liquid backwash.
FIG. 16 is a schematic illustration of a multi pump filter system of the invention comprising a ceramic dead-end filter operating in cleaning mode and comprising a pressurized liquid backwash.
FIG. 17 is a schematic illustration of a multi pump filter system of the invention comprising a ceramic dead-end filter operating in cleaning mode and comprising a gas backwash and a chemical liquid backwash.

The figures are schematic and may be simplified for clarity. Throughout, the same reference numerals are used for identical or corresponding parts.

Further scope of applicability of the present invention will become apparent from the detailed description given hereinafter. However, it should be understood that the detailed description and specific examples, while indicating certain preferred embodiments of the invention, are given by way of illustration only, since various changes and modifications within the spirit and scope of the invention will become apparent to those skilled in the art from this detailed description.

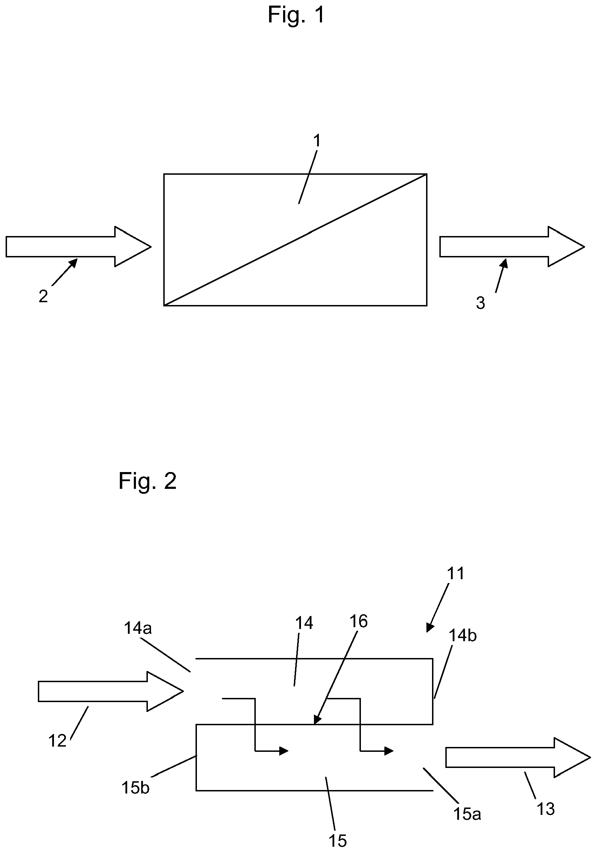

FIG. 1 shows a principal operation of a dead-end filter 1. The dead-end filter 1 comprises a not shown filter membrane which in this invention is a ceramic filter membrane comprising a selective front layer as described above. In use the liquid to be filtered is introduced into the filter in a feeding flow indicated by the arrow 2, the liquid passes the filter and exits as a permeate as indicated with the arrow 3. All the liquid of the feeding flow passes the filter membrane, and particles are captured by the filter membrane. In the ceramic dead-end filter of the invention particles will be collected on the front face of the selective front layer and substantially none of the particles are collected inside the filter membrane.

FIG. 2 shows a principal operation of a dead-end filter 11. The dead-end filter 11 comprises at least one closed end inflow channel 14, and at least one closed end outflow channel 15. The inflow channel 14 comprises an inflow end 14a and a closed end 14b and the outflow channel 15 comprises an outflow end 15a and a closed end 15b. The inflow channel 14 and the outflow channel 15 are arranged in side-by-side relationship and are separated from each other by a ceramic filter membrane 16, which ceramic filter membrane 16 comprises a not shown selective front layer facing into the inflow channel 14. The ceramic filter membrane 16 could comprise an additional not shown selective front layer facing into the outflow channel 15.

In use the liquid to be filtered is introduced into the inflow end 14a of the inflow channel 14 in a feeding flow indicated by the arrow 12. The liquid passes the ceramic filter membrane 16 and passes into the outflow channel 15 as a permeate and further the permeate exits via the outflow end 15a and as a permeate as indicated with the arrow 13.

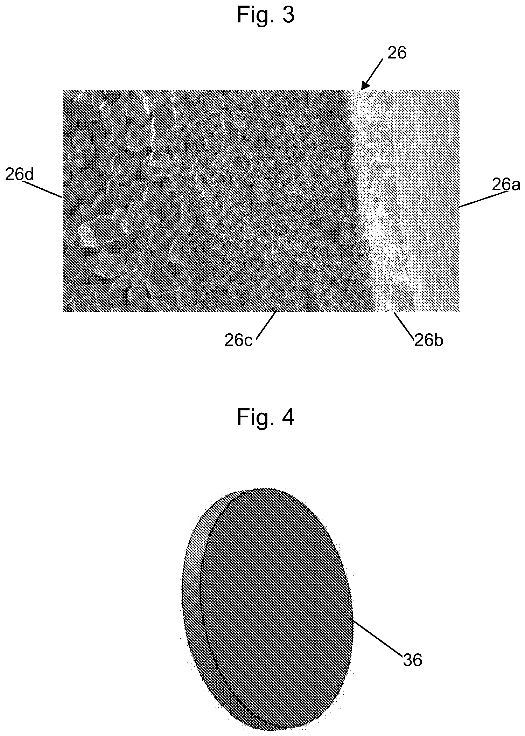

The ceramic filter membrane 26 shown in FIG. 3 comprises a first supporting layer 26b, a second supporting layer 26c and a third supporting layer 26d and a selective front layer 26a. The selective front layer 26a comprises a maximum pore size which is sufficiently small to prevent particles from a feeding stream of a liquid from passing into the body of the ceramic filter membrane 26 as described above. The maximum pore size may for example be as small as down to about 0.5 nm. The first supporting layer 26b comprises grains larger than the grains of the selective front layer 26a, and accordingly the average as well as the maximum pore size of the first supporting layer 26b is larger than respectively the average and the maximum pore size of the selective front layer 26a. The second supporting layer 26c comprises grains larger than the grains of the first supporting layer 26b, and accordingly the average as well as the maximum pore size of the second supporting layer 26c is larger than respectively the average and the maximum pore size of the first supporting layer 26b. The third supporting layer 26d comprises grains larger grains than the grains of the second supporting layer 26c, and accordingly the average as well as the maximum pore size of the third supporting layer 26d is larger than respectively the average and the maximum pore size of the second supporting layer 26c. All of the layers of the shown ceramic filter membrane are consisting substantially of silicon carbide Due to the unique structure of the ceramic filter membrane 26, particles of a feeding stream will not result in a blockage of the ceramic filter membrane.

FIG. 4 shows a disc shaped membrane 36 for a ceramic dead-end filter of the invention. The disc shaped membrane 36 may be mounted in a not shown filter house as the only ceramic filter membrane or in combination with one or more other not shown ceramic filter membranes which may be identical or different from the disc shaped membrane 36.

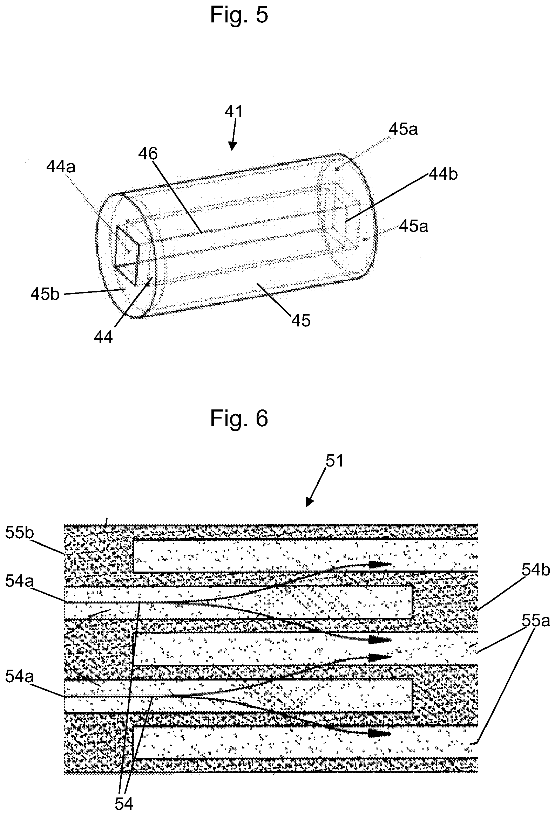

FIG. 5 is a schematic illustration of a single channel ceramic dead-end filter 41 of the invention. The single channel dead-end filter 41 comprises a single closed end inflow channel 44, and a closed end outflow path 15. The inflow channel 44 comprises an inflow end 44a and a closed end 44b and the outflow path 45 comprises an outflow end 45a and a closed end 45b. The inflow channel 44 is surrounded by the outflow path 15 and comprises a wall of a ceramic filter membrane 46, which ceramic filter membrane 46 comprises a not shown selective front layer facing into the inflow channel 44.

In use the liquid to be filtered is introduced into the inflow end 44a of the inflow channel 44 in a feeding flow. The liquid passes the ceramic filter membrane 46 and passes into the outflow channel 45 as a permeate and further the permeate exits via the outflow end 45a and as a permeate.

FIG. 6 is a cross-sectional view of a multi channel ceramic dead-end filter 51 of the invention. The dead-end filter 51 comprises a plurality of closed end inflow channels 54, and a plurality of closed end closed end outflow channels 55. The inflow channels 54 comprise each an inflow end 54a and a closed end 54b and the outflow channels 55 comprise each an outflow end 55a and a closed end 55b. The inflow channels 54 and the outflow channels 55 are arranged alternately in side-by-side relationship and are separated from each other by ceramic filter membranes 56, which ceramic filter membranes 56 comprise a not shown selective front layer facing into the respective inflow channels 54.

In use the liquid to be filtered is introduced into the inflow ends 54a of the inflow channels 54 in a feeding flow. The liquid passes the ceramic filter membranes 56 and passes into the outflow channels 55 as a permeate and further the permeate exits via the outflow ends 55a and as a permeate.

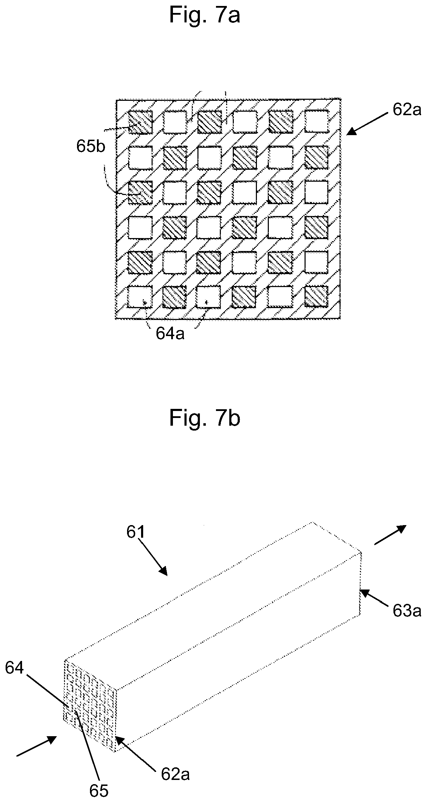

The honeycomb shaped channel ceramic dead-end filter 61 of the invention shown in FIGs. 7a and 7b comprises a plurality of closed end inflow channels 54, and a plurality of closed end outflow channels 55 arranged alternately in side-by-side relationship and separated from each other by not visible ceramic filter membranes. The plurality of closed end inflow channels and closed end outflow channels extend from an inflow end 62a to an outflow end 63a. The inflow channels 64 comprise each an inflow end 64a and a not visible closed end and the outflow channels 65 comprise each a not visible outflow end and a closed end 65b. FIG. 7a shows the inflow end 62a.

The arrow 62 indicates the feeding flow of the liquid to be filtered and the arrow 63 indicates the exit flow of the permeate.

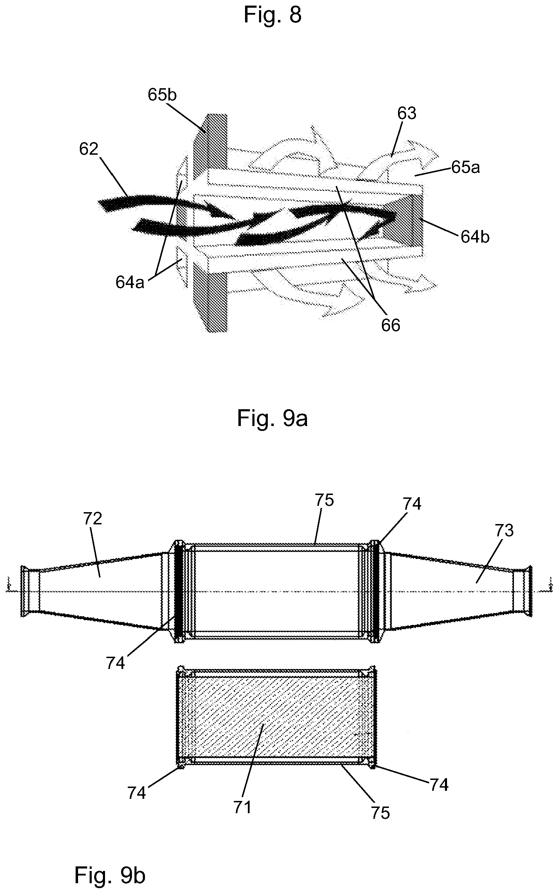

FIG. 8 shows a principal sketch of a dead-end filtration process using a honeycomb shaped channel ceramic dead-end filter such as the honeycomb shaped channel ceramic dead-end filter shown in FIGs. 7a and 7b.

The liquid to be filtered is introduced into the inflow end 64a of the inflow channels 64 in a feeding flow indicated by the arrows 62. The liquid passes the ceramic filter membranes 66 and passes into the outflow channels 65 as a permeate and further the permeate exits via the outflow end 65a and as a permeate as indicated with the arrows 63.

FIGs. 9a and 9b are schematic illustrations of a ceramic dead-end filter 71 of the invention mounted in a filter house 75. The filter house 75 comprises a feeding pipe 72 for feeding the liquid to be filtered and a permeate pipe 73 for withdrawing the filtered permeate. An O-ring 74 is arranged in each end of the ceramic dead-end filter 71 to assist in the mounting within the filter house 75. The ceramic dead-end filter 71 is a honeycomb shaped (not shown) ceramic dead-end filter, such as the honeycomb shaped ceramic dead-end filter of FIGs. 7a and 7b.

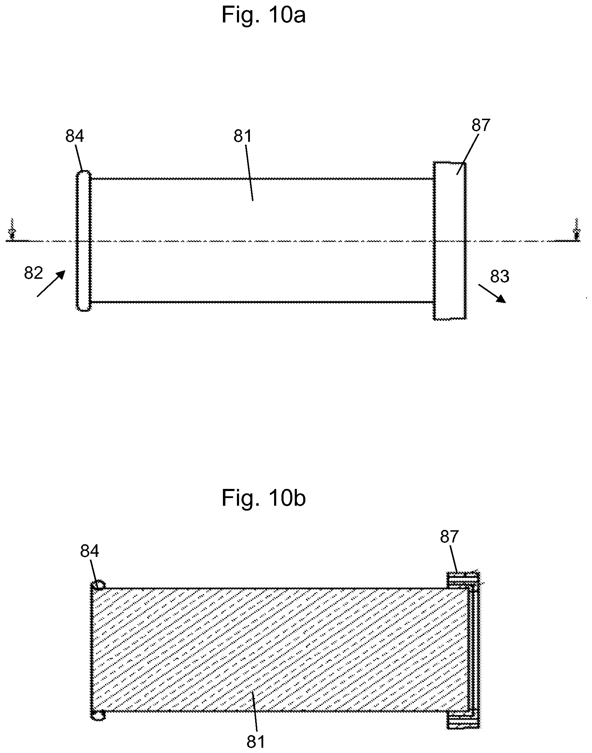

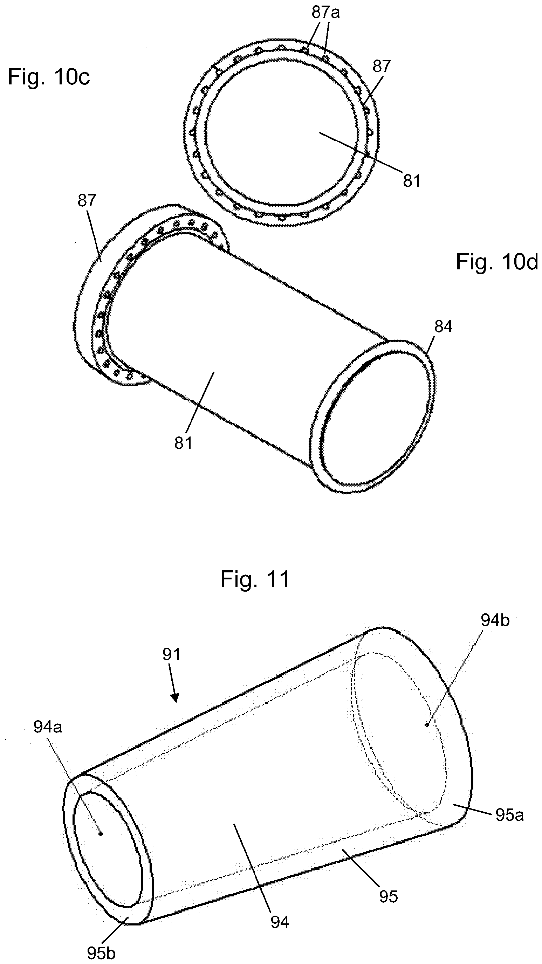

FIGs. 10a - 10d are schematic illustrations of a ceramic dead-end filter 81 of the invention prepared to be mounted in a not shown filter house. The ceramic dead-end filter 81 is a honeycomb shaped (not shown) ceramic dead-end filter, such as the honeycomb shaped ceramic dead-end filter of FIGs. 7a and 7b. The ceramic dead-end filter 81 is mounted with an o-ring 84 in its inflow end as indicated with the arrow 82 and it is mounted with a perforated annular mounting ring 87 in its outflow end as indicated with the arrow 83. The o-ring 84 provides a safe sealing to prevent undesired backflow of permeate from the space between the honeycomb structure of the ceramic dead-end filter 81 and the house. The perforated annular mounting ring 87 is arranged such that permeate from the space between the honeycomb structure of the ceramic dead-end filter 81 and the house can exit the ceramic dead-end filter via the perforations 87a of the perforated annular mounting ring 87.

FIG. 10a is a side view of the ceramic dead-end filter, FIG. 10b illustrates a part of cross-sectional view of the ceramic dead-end filter. FIG. 10c is an end view of the ceramic dead-end filter and FIG. 10c is a perspective view of the ceramic dead-end filter.

FIG. 11 is a perspective illustration of a conical, single channel ceramic dead-end filter 91 of the invention. The single channel dead-end filter 91 comprises a single closed end inflow channel 94, and a closed end outflow path 95. The inflow channel 94 comprises an inflow end 94a and a closed end 94b and the outflow path 95 comprises an outflow end 95a and a closed end 95b. The inflow channel 94 is surrounded by the outflow path 95 and comprises a wall of a ceramic filter membrane 96 with a conical shape. The ceramic filter membrane 96 comprises a not shown selective front layer facing into the inflow channel 94.

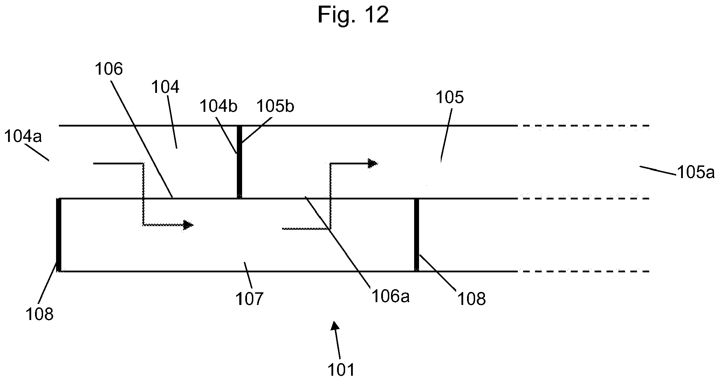

FIG. 12 is a schematic illustration of a liquid flow in a ceramic dead-end filter of the invention. Only a section of the dead-end filter 101 in cross sectional view is shown. The dead-end filter 101 comprises at least one closed end inflow channel 104, and at least one closed end closed end outflow channel arranged in axial continuation of the inflow channel 104. The inflow channel 104 comprises an inflow end 104a and a closed end 104b and the outflow channel 105 comprises an outflow end 105a and a closed end 105b. The inflow channel 104 and the outflow channel 105 share the closed end 104b, 105b. The ceramic dead-end filter comprises at least one semi-closed chamber, such as a treatment chamber 107 in the form of a channel which comprises two closed ends 108. The chamber 107 may for example comprise a chemical to treat the liquid, an enzyme, a catalyst or another medium. A membrane 106, 106a is arranged between the inflow channel 104 and the chamber 107 and the chamber 107 and the outflow channel 105. The membrane 106 between the inflow channel 104 and the chamber 107 is a ceramic filter membrane comprising a not shown selective front layer facing into the inflow channel 104. The membrane 106a between the chamber 107 and the outflow channel 105 may be a similar membrane or any other membrane.

In use the liquid to be filtered is introduced into the inflow end 104a of the inflow channel 104 in a feeding flow. The liquid passes the ceramic filter membrane 106 and passes into the chamber 107. From the chamber 107 the liquid passes the membrane 106b into the outflow channel 105 as a permeate and further the permeate exits via the outflow ends 105a and as a permeate.

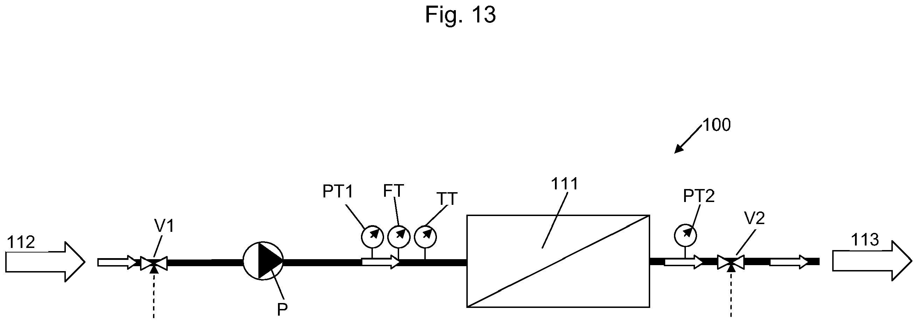

FIG. 13 is a schematic illustration of a filter system 100 of the invention comprising a ceramic dead-end filter operating in filtration mode. The arrows indicate the flow direction of the liquid when the filter system 100 operates in filtration mode. The filter system 100 comprises from its inflow towards its outflow a liquid supply as indicated by the arrow 112, a first valve V1, a pump P, a pressure sensor PT1, a flow velocity sensor FT, a temperature sensor TT, a ceramic dead-end filter 111, a second pressure sensor PT2 a second valve V2 and a permeate collecting unit as indicated with the arrow 113.

The ceramic dead-end filter 111 is a ceramic dead-end filter of the invention as described above. When the filter system 100 operates in filtration mode the valves V1, V2 are open. The valves V1, V2 may for example be electrically actuated or pneumatically actuated. The filter system 100 may comprise a not shown operating system. The valves V1, V2 may for example be automatically or semi-automatically adjusted by the operation system in relation to the pressure drop (PT2-PT1) over the ceramic dead-end filter 111.

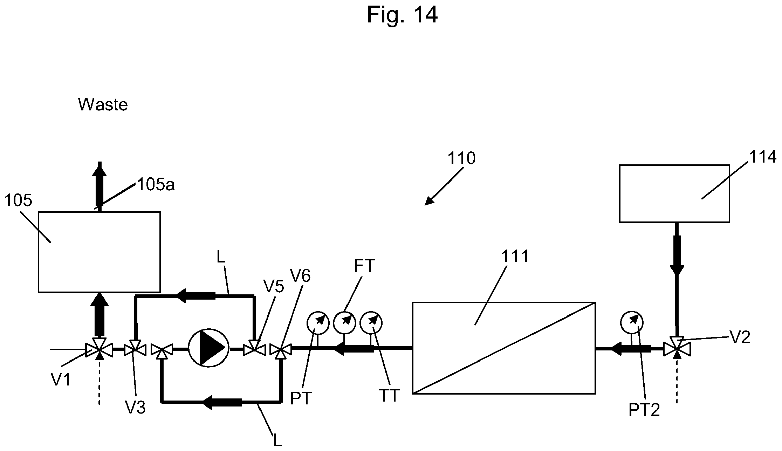

FIG. 14 is a schematic illustration of a single pump filter system 110. The filter system may comprise the units as described for the filter system 100 and comprises additionally a backwash reservoir 114 comprising a liquid for backwash such as permeate or tap water, four valves V3, V4, V5 and V6 and connected pipes for providing a loop L to reverse the flow direction providing by the pump P and a waste collecting unit 105 and/or a pipe 105a for withdrawing waste.

When the filter system 110 operates in cleaning mode, the pump direction is reversed by opening the valves V3, V4, V5 and V6 and the flow of the liquid will be reversed via the loop L. Simultaneously the valve V2 is switched to open for the backwash reservoir 114, and valve V1 is switched to open for the waste collecting unit 105 and/or a pipe 105a for withdrawing waste. The liquid for backwash is now sent in backwash over the ceramic filter membrane(s) of the ceramic dead-end filter 111 whereby it is cleaned and the waste is collected and/or withdrawn in the waste collecting unit 105 and/or a pipe 105a for withdrawing waste.

In a not shown variation of the filter system 110 the pump P is a reversible pump and accordingly the valves V3, V4, V5 and V6 and the loop L may be omitted.

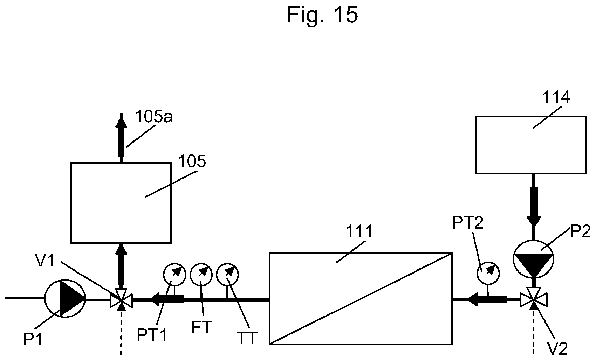

FIG. 15 is a schematic illustration of a multi pump filter system 120 of the invention. The filter system 120 may comprise the units as described for the filter system 100 except that the pump is replaced by a pump P1 placed in filter mode flow direction before the valve V1. The filter system 120 comprises additionally a backwash reservoir 114 comprising a liquid for backwash such as permeate or tap water, a backwash pump P2 and a waste collecting unit 105 and/or a pipe 105a for withdrawing waste.

When the filter system 110 operates in cleaning mode, the pump direction is reversed by switching valve V1 to close for liquid pumped by pump P1 and to open for the waste collecting unit 105 and/or a pipe 105a for withdrawing waste. Simultaneously the valve V2 is switched to open for the backwash reservoir 114 and the pump P2 is started. The liquid for backwash is now pumped in backwash by pump P2 over the ceramic filter membrane(s) of the ceramic dead-end filter 111 whereby it is cleaned and the waste is collected and/or withdrawn in the waste collecting unit 105 and/or a pipe 105a for withdrawing waste.

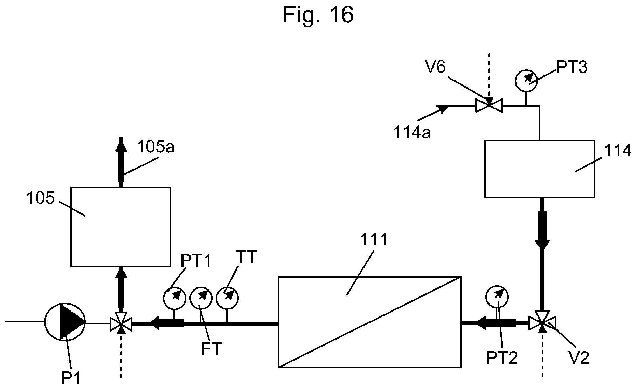

FIG. 16 is a schematic illustration of a filter system 130 of the invention comprising a ceramic dead-end filter operating in cleaning mode and comprising a pressurized liquid backwash.

The filter system 130 of FIG. 16 is a variation of the filter system 120 of FIG. 15. The filter system 130 of FIG. 16 differs from the filter system 120 of FIG. 15 in that the backwash by pump P2 is omitted. Instead the backwash reservoir 114 is pressurized via pipe 114a. The filter system 130 further comprises valve V6 for opening/closing and/or adjusting the opening for the supplied gas pressure. Further the filter system 130 comprises pressure sensor PT3 for measuring the pressure. The valve V6 and the sensor PT3 may be connected to an operating system for automatically or semi-automatically control.

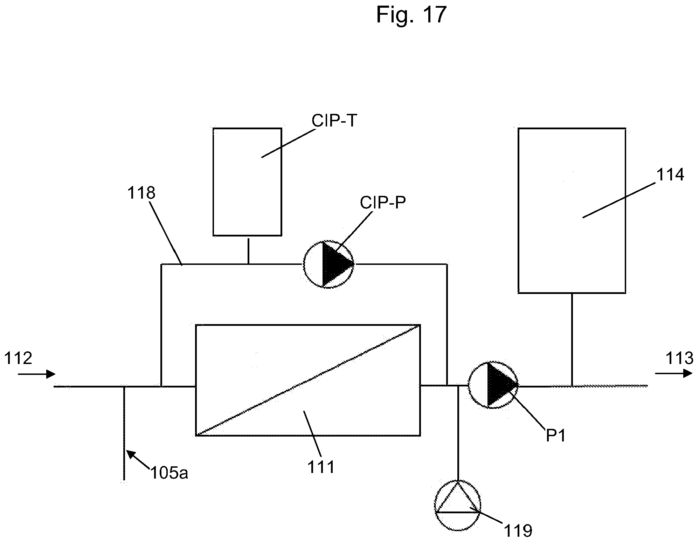

FIG. 17 is a schematic illustration of a filter system 140 of the invention comprising a ceramic dead-end filter 111 capable of operating in filter mode and in cleaning mode in alternating steps. For simplification all valves are not shown in the drawing, The filter system 140 comprises a liquid supply as indicated by the arrow 112 and a permeate outflow as indicated with the arrow 113 between the liquid supply 112 and the permeate outflow 113 is arranged a ceramic dead-end filter of the invention and a reversible pump for pumping the liquid through the filter from the liquid supply 112 to the permeate outflow 113 when the filter system operates in its filter mode.

The filter system 140 further comprises a blower 119 for supplying a gas in backwash through the filter. When the blower is in operation as a part of the cleaning mode, the pump P1 should be closed or arranged not to pump over the ceramic dead-end filter 111.

The filter system 140 further comprises a chemical liquid cleaning loop 118, comprising a Cleaning in Place (CIP) dosage pump CIP-P and a Cleaning in Place (CIP) tank CIP-T comprising a chemical liquid for cleaning the filter. When the chemical liquid cleaning loop 118 is in operation as a part of the cleaning mode, the pump P1 should either be closed or arranged to pump in reverse over the ceramic dead-end filter 111.

The filter system 140 further comprises a permeate/tap water tank 6 for providing an ordinary backwash through the filter. When an ordinary backwash should be operating pump P1 should be arranged to pump in reverse over the ceramic dead-end filter 111.

The filter system 140 can now be switched between a filtering and a cleaning mode, and the cleaning can comprise a) a gas backwash sub-mode, a cleaning liquid backwash sub-mode and an ordinary (permeate/tap water) backwash sub-mode which can be operated in any order and optionally simultaneously or overlapping each other.

### EXAMPLES

### Example 1

A support layer is produced by extruding a paste of different classes of grain sizes of the ceramic material, structurally bonded with organic binders. The paste is extruded through a specific tool, which gives the geometry of the support layer. The green support layer is fired where the structure of the ceramic grains is fixated. The selective front layer is produced by a slip casting technique, where the different classes of grain sizes of the ceramic material are mixed with organic binders into a slip casting media. The slip casting media is a colloidal suspension of the ceramic grains in a dispersion media. The composition of the slip casting media, in particular the ceramic grains and ceramic precursors, the structure of the support layer and the conditions during slip casting, determines the characteristics of the final membrane. The membrane is fired at high temperatures and the structure of the ceramic grains is fixated. During the firing the organic binders are burned off.

More layers can be applied with successively decreasing maximum pore size, thus meaning that the last applied layer is the selective front layer, and the previous slip casted layers act as support layers. The additional slip casted layers are produced as described above.

The resulting maximum pore size for both support layer and selective layers depends on the ratio of grain sizes in the paste/slip casting media. Since the ratio of involved grain sizes in some cases are identical for different final pore sizes - e.g. for a support layer and for a selective front layer, the porosity of the support and selective layers may be identical. This is due to the fact that the packing density of the grains in the paste and slip casting media is more or less identical even though the actual grain sizes differs. The porosity of different support and selective layers may for example be estimated from scanning electron microscope (SEM) images.

### Example 2 not according to the invention

For certain applications it is possible to produce a ceramic membrane without support layer. The selective front layer is produced similar to the support layer above, however with classes of ceramic grains generally smaller than if the layer should act as a support layer for a specific selective layer. This production technique is typically limited to selective front layers with relatively large maximum pore size diameters such as selective front layers with maximum pore size of from about 1 µm to about 25 µm, as compared to a combination of support and selective layer.

### Example 3

A support layer is produced as described in example 1. The support layer is shaped by extrusion as a honeycomb structure with a plurality of open ended channels.

The channels of the honeycomb structure can be closed (plugged) with a paste of ceramic powder structured with organic binders. The paste can be distributed to every second channel via a fixed rubber template that allows the paste to be delivered only to the designated channels. The paste is forced into the channel for example with a piston, thus making individual closings (plugs). The paste is fired at conditions corresponding to the involved grain sizes of the ceramic material for example as described in US patent 2006/0236668.

### Example 4

This example describes the production of a dead-end filter of silicon carbide with a maximum pore size of 0.04 µm. The filter geometry for this example is 144 mm in diameter and 300 mm long, with channel dimensions of approximately two by two mm in height and width. It consists of approximately 1000 inflow channels and approximately 1000 outflow channels arranged in a honey comb structure.

A first support layer (10 µm maximum pore size) was produced by extruding a paste of different classes of grain sizes of the ceramic material, structurally bonded with organic binders. The first SiC grain size class was F280 and the second SiC grain size class was JIS 9000. The ceramic powder was bonded with a polyvinyl alcohol solution and water. The paste was extruded into a geometry described above with approximately 2000 squared open channels. Every second channel in the inflow end was closed (plugged) with the same paste as the first support layer. The channels were closed with the same technique as described above. The layer was fired at approximately 2200 °C for about 2 hours in an argon atmosphere.

The second support layer (1 µm maximum pore size) was deposited on the surface of the first support layer. The second layer consisted of a slip casting media of 30 % SiC grains (75 % F600 and 25 % JIS 9000), 5 % of a 10 % polyvinyl alcohol solution as a temporary binder and 65 % water. The slip casting media was casted on the inflow channels only. This was done by placing the filter in an upright position, with the inflow end downwards and then elevating the slip casting media in the inflow channels. This layer was fired after drying for two hours at approximately 1950°C in an argon atmosphere.

The selective front layer (0.04 µm maximum pore size) was deposited on the surface of the second support layer. The selective front layer consisting of a slip casting media was composed of organic binders described above and different SiC grain size distributions from JIS 9000 as coarse grain and JIS 20000 as fine grain. The selected grains were smaller than for the support layers. The slip casting media was casted on the inflow channels only. This was done by placing the filter in an upright position, with the inflow end downwards and then elevating the slip casting media in the inflow channels. Every second outflow channel was closed, with the same technique as described earlier, in an alternating pattern compared to the closed inflow channel. This layer was fired after drying at approximately 1850 °C in argon for 60 minutes to form approximately 0.2 mm thick porous membranes.

The dead-end SiC filter produced as above had the following properties and performances:

**Table 2**

| | |
|---|---|
| Filter dimension (Diameter x Length) | Ø144 x L300 [mm] |
| Maximum pore size of selective front layer (approx) | 0.04 [µm] (*) |
| Number of inflow channels (approx) | 1000 [-] |
| Filtration area (approx) | 2.2 [m²] |
| Filter fluid volume (approx) | 1.0 [L] |
| Filtration capacity (approx) | 10 [m³/h] (**) |

| | |
|---|---|
| Comments to Table 2: (*) The pore size is measured on waste water from the textile industry, where the membrane as described above was found to have a cut-off between 50kD and 100kD which corresponds to a maximum pore size of approximately 0.04 micron. (**) The filtration capacity is determined for Danish tap water at 25°C and 1 bar pressure difference over the filter. | |

### Example 5

This example describes the production of a ceramic dead-end filter of silicon carbide with a maximum pore size of 1 µm.

The ceramic dead-end filter was produced as described in example 4, with the difference that the second support layer constituted the selective front layer and no further layer was applied onto this selective front layer.

### Example 6

This example describes the production of a ceramic dead-end filter of silicon carbide with a membrane having a sandwich structure comprising 2 opposite selective front layers, each having a maximum pore size of 1 µm.

The ceramic dead-end filter was produced as described in example 5, with the difference that the slip casting media for the selective front layers is applied both in the inflow channels and in the outflow channels.

### Example 7

This example describes the production of a ceramic dead-end filter comprising α-alumina grains and silicon carbide grains. The ceramic dead-end filter was produced as described in example 4, with the difference that the slip casting media for the selective front layers is composed of organic binders described above and α-alumina grains in different grain size distributions from JIS 9000 as coarse grain and JIS 20000 as fine grain.

This layer was fired after drying at approximately 1700 °C in argon for 60 minutes to form approximately 0.2 mm thick porous membranes.

The invention is defined by the features of the independent claim(s). A number of embodiments are defined in the dependent claims and/or described above. Any reference numerals in the claims are intended to be non-limiting for their scope.

Some embodiments have been shown in the foregoing, but it should be stressed that the invention is not limited to these, but may be embodied in other ways within the subject-matter defined in the following claims.

## Claims

1. A ceramic dead-end filter for filtration of liquid, the filter comprising at least one ceramic filter membrane having a first side with a front surface and a second side, said ceramic membrane comprising a selective front layer providing said front surface, said selective front layer comprising a maximum pore size diameter of 25 µm or smaller, such as 20 µm or smaller, such as 15 µm or smaller, such as 10 µm or smaller, such as 5 µm or smaller, such as 1 µm or smaller, the selective front layer comprises a circular correlated maximum pore size diameter determined by the Bubble Point Test Method, according to ASTM Standard E-128 and the International Organization for Standardization (ISO) test standard 4003, but without multiplying with a correction factor, which is 25 µm or smaller, said selective front layer has a thickness of at least the maximum pore size up to 100 times the maximum pore size and wherein said ceramic filter membrane comprises at least one supporting layer providing said second side of said ceramic filter membrane, said at least one supporting layer has a maximum pore size diameter which is at least 2 times larger than said maximum pore size diameter of said selective front layer.

2. A ceramic dead-end filter as claimed in claim 1 wherein the selective front layer comprises a porosity of at least 30 % by volume, such as at least 40 % by volume, such as at least 50 % by volume, such as at least 60 % by volume, preferably the selective front layer comprises a pore size diameter distribution such that at least 75 % by volume of the pores have a pore size diameter from the maximum pore size diameter to 0.05 times the maximum pore size diameter.

3. A ceramic dead-end filter as claimed in any one of the preceding claims wherein the selective front layer comprises a pore size diameter distribution such that at least 50 % by volume of the pores (D-50) have a pore size diameter from the maximum pore size diameter to 0.05 times the maximum pore size diameter, such as from about the maximum pore size diameter to 0.1 times the maximum pore size diameter, such as from the maximum pore size diameter to 0.2 times the maximum pore size diameter, such as from about the maximum pore size diameter to 0.3 times the maximum pore size diameter.

4. A ceramic dead-end filter as claimed in any one of the preceding claims wherein the selective front layer has a thickness of 10 µm or more, such as 50 µm or more, such as 100 µm or more, such as 200 µm or more, such as up to 3 mm, such as from 10 µm to 1 mm.

5. A ceramic dead-end filter as claimed in claim in any one of the preceding claims, wherein said one or more supporting layers comprise a first supporting layer in contact with said selective front layer and a second supporting layer in contact with said first supporting layer, said first supporting layer having a porosity which is substantially equal to or larger than said porosity of said selective front layer and said second supporting layer having a porosity which is substantially equal to or larger than said porosity of said first supporting layer.

6. A ceramic dead-end filter as claimed in any one of the preceding claims wherein said filter membrane comprises a sandwich structure comprising at least one supporting layer sandwiched between a first and a second selective front layer, said selective front layers comprising front surfaces facing away from each other, said front surfaces preferably being substantially parallel, said filter membrane preferably comprises 2, 3 or more supporting layers sandwiched between a first and a second selective front layer.

7. A ceramic dead-end filter as claimed in any one of the preceding claims wherein said filter membrane comprises one or more ceramic materials selected from ceramic oxides, such as alumina, zirconia, spinel (a combination of magnesium and aluminum oxides), mullite (a combination of aluminum and silicon oxides); ceramic non-oxides, such as carbides, borides, nitrides, silicates and silicides; and combinations and compositions thereof, the selective front layer preferably comprises one or more ceramic materials selected from alumina, zirconia, titania, boron nitride, silica, mullite, silicon carbide (SiC), and combinations thereof, said ceramic filter membranes preferably comprise recrystallized α-silicon carbide.

8. A ceramic dead-end filter as claimed in any one of the preceding claims wherein said selective front layer comprises grains comprising silicon carbide, said silicon carbide comprising grains preferably obtained from sintering a ceramic precursor comprising a first ceramic material with a first medium grain size (C1 - D-50) and a second ceramic material with a second medium grain size (C2 - D-50), said second ceramic material consisting essentially of silicon carbide and said second medium grain size (C2 - D-50) being substantially smaller than said first medium grain size (C1 - D-50), preferably the size ratio C1 - D-50 to C2 - D-50 being from about 10:1 to about 2:1, such as from about 6:1 to about 2:1, such as from about 4:1 to about 2.5:1, preferably the second ceramic material consists essentially of α-silicon carbide and said second medium grain size (C2 - D-50) is up to 5 µm, such as from 2 µm to 0.01 µm, such as from 1 µm to 0.1 µm.

9. A ceramic dead-end filter as claimed in any one of the preceding claims wherein the ceramic filter membrane comprises an active component or a precursor for an active component, said active component or precursor therefore preferably being coated onto the ceramic filter membrane, immobilized to the ceramic filter membrane, integrated or incorporated into the ceramic filter membrane, the active component or precursor therefore is preferably selected from catalytic components, such as platinum and platinum compositions; organic components, such as enzymes; and/or ion exchanger components such as ion-exchange resin beads.

10. A ceramic dead-end filter as claimed in any one of the preceding claims wherein said ceramic dead-end filter is shaped as a disc and/or as a vessel or the ceramic dead-end filter comprises a plurality of elongated closed end inflow channels, each of said dead-end inflow channels comprise a channel wall provided totally or partly by one or more ceramic filter membranes, said one or more ceramic filter membranes comprise a selective front layer facing the inside of said respective elongated closed end inflow channels, said elongated closed end inflow channels preferably being arranged with a distance to each other such that a liquid can pass through said one or more ceramic filter membranes of said elongated closed end inflow channels.

11. A ceramic dead-end filter as claimed in any one of the preceding claims wherein said ceramic dead-end filter comprises a filter fluid volume and said one or more ceramic filter membranes of said dead-end filter comprise a total filter area, said total filter area being at least 0.1 m² per L filter fluid volume, such as at least 0.5 m² per L filter fluid volume, such as at least 1 m² per L filter fluid volume, such as at least 5 m² per L filter fluid volume.

12. A ceramic dead-end filter as claimed in any one of the preceding claims wherein said ceramic dead-end filter comprises a ceramic filter membrane structure with a sufficiently low resistance to allow a primed water flux of at least about 1 m³/(h*m²*bar), measured at 25 °C and at a pressure difference where delta P is a linear function to the flux, preferably the primed water flux is at least 1 m³/(h*m²*bar), such as at least 5 m³/(h*m²*bar), such as at least 20 m³/(h*m²*bar), such as up to 100 m³/(h*m²*bar), such as from 1 m³/(h*m²*bar)to 55 m³/(h*m²*bar), preferably said selective front layer comprises a maximum pore size diameter of 500 nm or smaller, said ceramic dead-end filter comprising a ceramic filter membrane structure with a sufficiently low resistance to allow a primed water flux of 1 m³/(h*m²*bar), measured at 25 °C and at a pressure difference where delta P is a linear function to the flux, preferably the primed water flux is at least 2 m³/(h*m²*bar), such as at least 5 m³/(h*m²*bar), such as at least 20 m³/(h*m²*bar), such as up to 100, such as from 1 m³/(h*m²*bar)to 55 m³/(h*m²*bar). m³/(h*m²*bar)

13. A filter system comprising a ceramic dead-end filter as claimed in any one of the preceding claims, a feeding pipe for feeding liquid into the ceramic dead-end filter and/or a permeate pipe for withdrawing filtered liquid and at least one liquid pump connected to said feeding pipe and/or to said permeate pipe, said filter system comprises a ceramic dead-end filter, a feeding pipe for feeding liquid into the ceramic dead-end filter and/or a permeate pipe for withdrawing filtered liquid and at least one liquid pump connected to said feeding pipe and/or to said permeate pipe, said filter system further comprising a gas feeding pipe connected to said filter system to feed a gas in backwash through the ceramic dead-end filter, said filter system preferably being arranged to provide said gas backwash as the only flow or simultaneously with the liquid backwash or simultaneously with a chemical liquid backwash.

14. A method of filtering liquid through a ceramic dead-end filter claimed in any one of the preceding claims 1-1 2, said method comprising operating said ceramic dead-end filter in alternating modes comprising a filtering mode and a cleaning mode, wherein said liquid is filtered through said ceramic dead-end filter in said filtering nodes, wherein said cleaning mode comprises passing a chemical liquid in ordinary low and/or in backwash through said ceramic dead-end filter, said chemical liquid comprising a pH regulating agent and/or a surfactant, such as a detergent.

## Patentansprüche

1. Keramischer Dead-End-Filter zur Filtration von Flüssigkeit, wobei der Filter mindestens eine keramische Filtermembran umfasst, die eine erste Seite mit einer Vorderfläche und eine zweite Seite aufweist, wobei die keramische Membran eine selektive Frontschicht umfasst, welche die Vorderfläche bereitstellt, wobei die selektive Frontschicht einen maximalen Porendurchmesser von 25 µm oder kleiner, wie beispielsweise 20 µm oder kleiner, wie beispielsweise 15 µm oder kleiner, wie beispielsweise 10 µm oder kleiner, wie beispielsweise 5 µm oder kleiner, wie beispielsweise 1 µm oder kleiner, umfasst, wobei die selektive Frontschicht einen kreisförmig korrelierten maximalen Porendurchmesser, der nach dem BubblePoint-Testverfahren gemäß ASTM-Standard E-128 und der Prüfnorm 4003 der Internationalen Organisation für Normung (ISO), jedoch ohne Multiplikation mit einem Korrekturfaktor, bestimmt wird, umfasst, der 25 µm oder kleiner ist, wobei die selektive Frontschicht eine Dicke von mindestens der maximalen Porengröße bis zu dem 100-fachen der maximalen Porengröße aufweist und wobei die keramische Filtermembran mindestens eine Trägerschicht umfasst, welche die zweite Seite der keramischen Filtermembran bereitstellt, wobei die mindestens eine Trägerschicht einen maximalen Porendurchmesser aufweist, der mindestens zweimal größer als der maximale Porendurchmesser der selektiven Frontschicht ist.

2. Keramischer Dead-End-Filter nach Anspruch 1, wobei die selektive Frontschicht eine Porosität von mindestens 30 Vol.-%, wie beispielsweise mindestens 40 Vol.-%, wie beispielsweise mindestens 50 Vol.-%, wie beispielsweise mindestens 60 Vol.-%, aufweist, wobei vorzugsweise die selektive Frontschicht eine Porengrößendurchmesserverteilung derart aufweist, dass mindestens 75 Vol.-% der Poren einen Porengrößendurchmesser von dem maximalen Porengrößendurchmesser bis zu dem 0,05-fachen des maximalen Porengrößendurchmessers aufweisen.

3. Keramischer Dead-End-Filter nach einem der vorhergehenden Ansprüche, wobei die selektive Frontschicht eine Porengrößendurchmesserverteilung derart aufweist, dass mindestens 50 Vol.-% der Poren (D-50) einen Porengrößendurchmesser von dem maximalen Porengrößendurchmesser bis zu dem 0,05-fachen des maximalen Porengrößendurchmessers aufweisen, wie beispielsweise von dem maximalen Porengrößendurchmesser bis zu dem 0,1-fachen des maximalen Porengrößendurchmessers, wie beispielsweise von dem maximalen Porengrößendurchmesser bis zu dem 0,2-fachen des maximalen Porengrößendurchmessers, wie beispielsweise von dem maximalen Porengrößendurchmesser bis zu dem 0,3-fachen des maximalen Porengrößendurchmessers.

4. Keramischer Dead-End-Filter nach einem der vorhergehenden Ansprüche, wobei die selektive Frontschicht eine Dicke von 10 µm oder mehr, wie beispielsweise 50 µm oder mehr, wie beispielsweise 100 µm oder mehr, wie beispielsweise 200 µm oder mehr, wie beispielsweise bis zu 3 mm, wie beispielsweise von 10 µm bis 1 mm, aufweist.

5. Keramischer Dead-End-Filter nach einem der vorhergehenden Ansprüche, wobei die eine oder die mehreren Trägerschichten eine erste Trägerschicht in Kontakt mit der selektiven Frontschicht und eine zweite Trägerschicht in Kontakt mit der ersten Trägerschicht umfassen, wobei die erste Trägerschicht eine Porosität aufweist, die im Wesentlichen gleich oder größer als die Porosität der selektiven Frontschicht ist, und die zweite Trägerschicht eine Porosität aufweist, die im Wesentlichen gleich oder größer als die Porosität der ersten Trägerschicht ist.

6. Keramischer Dead-End-Filter nach einem der vorhergehenden Ansprüche, wobei die Filtermembran eine Sandwich-Struktur aufweist, die mindestens eine Trägerschicht zwischen einer ersten und einer zweiten selektiven Frontschicht umfasst, wobei die selektiven Frontschichten voneinander abgewandte Frontflächen aufweisen, wobei die Frontflächen vorzugsweise im Wesentlichen parallel sind, wobei die Filtermembran vorzugsweise 2, 3 oder mehr Trägerschichten umfasst, die zwischen einer ersten und einer zweiten selektiven Frontschicht sandwichartig angeordnet sind.

7. Keramischer Dead-End-Filter nach einem der vorhergehenden Ansprüche, wobei die Filtermembran ein oder mehrere keramische Materialien umfasst, die aus keramischen Oxiden, wie beispielsweise Aluminiumoxid, Zirkoniumdioxid, Spinell (eine Kombination aus Magnesium- und Aluminiumoxiden), Mullit (eine Kombination aus Aluminium- und Siliziumoxiden); keramischen Nichtoxiden, wie beispielsweise Carbiden, Boriden, Nitriden, Silikaten und Siliziden; und Kombinationen und Zusammensetzungen davon ausgewählt sind, wobei die selektive Frontschicht vorzugsweise ein oder mehrere keramische Materialien umfasst, die aus Aluminiumoxid, Zirkoniumdioxid, Titandioxid, Bornitrid, Siliziumdioxid, Mullit, Siliziumcarbid (SiC) und Kombinationen davon ausgewählt sind, wobei die keramischen Filtermembranen vorzugsweise rekristallisiertes α-Siliziumcarbid umfassen.

8. Keramischer Dead-End-Filter nach einem der vorhergehenden Ansprüche, wobei die selektive vordere Schicht Körner umfasst, die Siliziumcarbid umfassen, wobei das Siliziumcarbid Körner umfasst, die vorzugsweise durch Sintern eines Keramikvorläufers erhalten werden, der ein erstes keramisches Material mit einer ersten mittleren Korngröße (C1 - D-50) und ein zweites keramisches Material mit einer zweiten mittleren Korngröße (C2 - D-50) umfasst, wobei das zweite keramische Material hauptsächlich aus Siliziumcarbid besteht und die zweite mittlere Korngröße (C2 - D-50) im Wesentlichen kleiner als die erste mittlere Korngröße (C1 - D-50) ist, wobei das Größenverhältnis C1 - D-50 zu C2 - D-50 vorzugsweise von ungefähr 10:1 bis ungefähr 2:1 beträgt, wie beispielsweise von ungefähr 6:1 bis ungefähr 2:1, wie beispielsweise von ungefähr 4:1 bis ungefähr 2,5:1, wobei vorzugsweise das zweite keramische Material hauptsächlich aus α-Siliziumkarbid besteht, und die zweite mittlere Korngröße (C2 - D-50) bis zu 5 µm beträgt, wie beispielsweise von 2 µm bis 0,01 µm, wie beispielsweise von 1 µm bis 0,1 µm.

9. Keramischer Dead-End-Filter nach einem der vorhergehenden Ansprüche, wobei die keramische Filtermembran eine aktive Komponente oder einen Vorläufer für eine aktive Komponente umfasst, wobei die aktive Komponente oder der Vorläufer dafür vorzugsweise auf die keramische Filtermembran aufgetragen, an der keramischen Filtermembran immobilisiert, in die keramische Filtermembran integriert oder eingearbeitet ist, wobei die aktive Komponente oder der Vorläufer dafür vorzugsweise aus katalytischen Komponenten, wie beispielsweise Platin und Platinzusammensetzungen; organischen Komponenten, wie beispielsweise Enzymen; und/oder Ionenaustauscherkomponenten, wie beispielsweise Ionenaustauscherharzkügelchen, ausgewählt ist.

10. Keramischer Dead-End-Filter nach einem der vorhergehenden Ansprüche, wobei der keramische Dead-End-Filter als eine Scheibe und/oder als ein Behälter geformt ist oder der keramische Dead-End-Filter eine Vielzahl von länglichen Einströmkanälen mit geschlossenem Ende aufweist, wobei jeder der Dead-End-Einströmkanäle eine Kanalwand aufweist, die ganz oder teilweise durch eine oder mehrere keramische Filtermembranen bereitgestellt wird, wobei die eine oder die mehreren keramischen Filtermembranen eine selektive Frontschicht umfassen, die der Innenseite der jeweiligen länglichen Einströmkanäle mit geschlossenem Ende zugewandt ist, wobei die länglichen Einströmkanäle mit geschlossenem Ende vorzugsweise mit einem Abstand zueinander derart angeordnet sind, dass eine Flüssigkeit durch die eine oder die mehreren keramischen Filtermembranen der länglichen Einströmkanäle mit geschlossenem Ende hindurchtreten kann.

11. Keramischer Dead-End-Filter nach einem der vorhergehenden Ansprüche, wobei der keramische Dead-End-Filter ein Filterfluidvolumen aufweist und die eine oder mehreren keramischen Filtermembranen des Dead-End-Filters eine Gesamtfilterfläche aufweisen, wobei die Gesamtfilterfläche mindestens 0,1 m² pro L Filterfluidvolumen, wie beispielsweise mindestens 0,5 m² pro L Filterfluidvolumen, wie beispielsweise mindestens 1 m² pro L Filterfluidvolumen, wie beispielsweise mindestens 5 m² pro L Filterfluidvolumen, beträgt.

12. Keramischer Dead-End-Filter nach einem der vorhergehenden Ansprüche, wobei der keramische Dead-End-Filter eine keramische Filtermembranstruktur mit einem ausreichend niedrigen Widerstand aufweist, um einen Wasserfluss nach Benetzung von mindestens ungefähr 1 m³/(h*m²*bar), gemessen bei 25 °C und bei einer Druckdifferenz, bei der delta P eine lineare Funktion des Flusses ist, zu ermöglichen, wobei vorzugsweise der Wasserfluss nach Benetzung mindestens 1 m³/(h*m²*bar), wie beispielsweise mindestens 5 m³/(h*m²*bar), wie beispielsweise mindestens 20 m³/(h*m²*bar), wie beispielsweise bis zu 100 m³/ (h*m²*bar), wie beispielsweise von 1 m³/ (h*m²*bar) bis 55 m³/(h*m²*bar) beträgt, wobei vorzugsweise die selektive Frontschicht einen maximalen Porengrößendurchmesser von 500 nm oder kleiner umfasst, wobei der keramische Dead-End-Filter eine keramische Filtermembranstruktur mit einem ausreichend niedrigen Widerstand umfasst, um einen Wasserfluss nach Benetzung von 1 m³/(h*m²*bar), gemessen bei 25 °C und bei einer Druckdifferenz, bei der delta P eine lineare Funktion des Flusses ist, zu ermöglichen, wobei vorzugsweise der Wasserfluss nach Benetzung mindestens 2 m³/(h*m²*bar), wie beispielsweise mindestens 5 m³/(h*m²*bar), wie beispielsweise mindestens 20 m³/(h*m²*bar), wie beispielsweise bis zu 100 m³/(h*m²*bar), wie beispielsweise von 1 m³/(h*m²*bar) bis 55 m³/(h*m²*bar) beträgt.

13. Filtersystem, umfassend einen keramischen Dead-End-Filter nach einem der vorhergehenden Ansprüche, eine Zuführungsleitung zum Zuführen von Flüssigkeit in den keramischen Dead-End-Filter und/oder eine Permeatleitung zum Abziehen von gefilterter Flüssigkeit und mindestens eine Flüssigkeitspumpe, welche mit der Zuführungsleitung und/oder mit der Permeatleitung verbunden ist, wobei das Filtersystem einen keramischen Dead-End-Filter, eine Zuführungsleitung zum Zuführen von Flüssigkeit in den keramischen Dead-End-Filter und/oder eine Permeatleitung zum Abziehen von gefilterter Flüssigkeit und mindestens eine Flüssigkeitspumpe umfasst, die mit der Zufuhrleitung und/oder der Permeatleitung verbunden ist, wobei das Filtersystem ferner eine Gaszuführungsleitung umfasst, die mit dem Filtersystem verbunden ist, um ein Gas in Rückspülung durch den keramischen Dead-End-Filter zuzuführen, wobei das Filtersystem vorzugsweise so eingerichtet ist, dass es die Gasrückspülung als einzigen Fluss oder gleichzeitig mit der Flüssigkeitsrückspülung oder gleichzeitig mit einer chemischen Flüssigkeitsrückspülung bereitstellt.

14. Verfahren zum Filtern von Flüssigkeit durch einen keramischen Dead-End-Filter nach einem der vorhergehenden Ansprüche 1 bis 12, wobei das Verfahren das Betreiben des keramischen Dead-End-Filters in abwechselnden Modi umfasst, die einen Filtermodus und einen Reinigungsmodus umfassen, wobei die Flüssigkeit durch den keramischen Dead-End-Filter in dem Filtermodus gefiltert wird, wobei der Reinigungsmodus das Durchleiten einer chemischen Flüssigkeit in dem normalen Fluss und/oder in der Rückspülung durch den keramischen Dead-End-Filter umfasst, wobei die chemische Flüssigkeit ein pH-Regulierungsmittel und/oder ein Tensid, wie beispielsweise ein Reinigungsmittel, umfasst.

## Revendications

1. Filtre aveugle en céramique destiné à filtrer un liquide, le filtre comprenant au moins une membrane de filtre en céramique ayant un premier côté doté d'une surface avant et un second côté, ladite membrane en céramique comprenant une couche avant sélective fournissant ladite surface avant, ladite couche avant sélective comprenant un diamètre de taille de pore maximal de 25 µm ou moins, par exemple de 20 µm ou moins, par exemple de 15 µm ou moins, par exemple de 10 µm ou moins, par exemple de 5 µm ou moins, par exemple de 1 µm ou moins, la couche avant sélective comprend un diamètre de taille de pore maximal corrélé circulaire déterminé par la méthode de test de point de bulle selon la norme ASTM E-128 et la norme de test ISO (Organisation Internationale de Normalisation) 4003 mais sans multiplier avec un facteur de correction, qui est de 25 µm ou moins, ladite couche avant sélective a une épaisseur d'au moins la taille de pore maximale jusqu'à 100 fois la taille de pore maximale et dans lequel ladite membrane de filtre en céramique comprend au moins une couche de support fournissant ledit second côté de ladite membrane de filtre en céramique, ladite au moins une couche de support a un diamètre de taille de pore maximal qui est au moins 2 fois supérieur au dit diamètre de taille de pore maximal de ladite couche avant sélective.

2. Filtre aveugle en céramique selon la revendication 1 dans lequel la couche avant sélective comprend une porosité d'au moins 30 % en volume, par exemple d'au moins 40 % en volume, par exemple d'au moins 50 % en volume, par exemple d'au moins 60 % en volume, de préférence la couche avant sélective comprend une distribution du diamètre de taille de pore telle qu'au moins 75 % en volume des pores ont un diamètre de taille de pore allant du diamètre de taille de pore maximal à 0,05 fois le diamètre de taille de pore maximal.

3. Filtre aveugle en céramique selon l'une quelconque des revendications précédentes dans lequel la couche avant sélective comprend une distribution de diamètre de taille de pore telle qu'au moins 50 % en volume des pores (D-50) ont un diamètre de taille de pore allant du diamètre de taille de pore maximal à 0,05 fois le diamètre de taille de pore maximal, par exemple d'environ le diamètre de taille de pore maximal à 0,1 fois le diamètre de taille de pore maximal, par exemple du diamètre de taille de pore maximal à 0,2 fois le diamètre de taille de pore maximal, par exemple du diamètre de taille de pore maximal à 0,3 fois le diamètre de taille de pore maximal.

4. Filtre aveugle en céramique selon l'une quelconque des revendications précédentes dans lequel la couche avant sélective a une épaisseur de 10 µm ou plus, par exemple de 50 m ou plus, par exemple de 100 µm ou plus, par exemple de 200 µm ou plus, par exemple jusqu'à 3 mm, par exemple de 10 µm à 1 mm.

5. Filtre aveugle en céramique selon l'une quelconque des revendications précédentes, dans lequel lesdites une ou plusieurs couches de support comprennent une première couche de support en contact avec ladite couche avant sélective et une seconde couche de support en contact avec ladite première couche de support, ladite première couche de support ayant une porosité qui est sensiblement égale ou supérieure à ladite porosité de ladite couche avant sélective et ladite seconde couche de support ayant une porosité qui est sensiblement égale ou supérieure à ladite porosité de ladite première couche de support.

6. Filtre aveugle en céramique selon l'une quelconque des revendications précédentes dans lequel ladite membrane de filtre comprend une structure de sandwich comprenant au moins une couche de support prise en sandwich entre une première et une seconde couche avant sélective, lesdites couches avant sélectives comprenant des surfaces avant tournées à l'opposé l'une de l'autre, lesdites surfaces avant étant de préférence sensiblement parallèles, ladite membrane de filtre comprend de préférence 2, 3 ou plus couches de support prises en sandwich entre une première et une seconde couche avant sélective.

7. Filtre aveugle en céramique selon l'une quelconque des revendications précédentes dans lequel ladite membrane de filtre comprend un ou plusieurs matériaux en céramique sélectionnés parmi les oxydes céramiques, tels que l'alumine, la zircone, le spinelle (une combinaison d'oxydes de magnésium et d'aluminium), la mullite (une combinaison d'oxydes d'aluminium et de silicium) ; les non oxydes de céramique, tels que les carbures, les borures, les nitrures, les silicates et les siliciures ; et les combinaisons et compositions associées, la couche avant sélective comprend de préférence un ou plusieurs matériaux de céramique sélectionnés parmi l'alumine, la zircone, l'oxyde de titane, le nitrure de bore, la silice, la mullite, la carbure de silicium (SiC), et les combinaisons de ceux-ci, lesdites membranes de filtre en céramique comprennent de préférence du carbure d'a-silicium recristallisé.

8. Filtre aveugle en céramique selon l'une quelconque des revendications précédentes dans lequel ladite couche avant sélective comprend des grains comprenant du carbure de silicium, ledit carbure de silicium comprenant des grains de préférence obtenus par frittage d'un précurseur de céramique comprenant un premier matériau de céramique avec une première taille de grain moyenne (C1 - D-50) et un second matériau de céramique avec une seconde taille de grain moyenne (C2 - D-50), ledit second matériau de céramique consistant essentiellement en carbure de silicium et ladite seconde taille de grains moyenne (C2 - D-50) étant sensiblement inférieure à ladite première taille de grain moyenne (C1 - D-50), de préférence le rapport de tailles C1 - D-50 sur C2 - D-50 étant d'environ 10/1 à environ 2/1, par exemple d'environ 6/1 à environ 2/1, par exemple d'environ 4/1 à environ 2,5/1, de préférence le second matériau de céramique consiste essentiellement en carbure d'a-silicium et ladite seconde taille de grain moyenne (C2 - D-50) peut atteindre 5 µm, par exemple de 2 µm à 0,01 µm, par exemple de 1 µm à 0,1 µm.

9. Filtre aveugle en céramique selon l'une quelconque des revendications précédentes dans lequel la membrane de filtre en céramique comprend un composant actif ou un précurseur pour un composant actif, ledit composant actif ou précurseur de celui-ci étant de préférence revêtu sur la membrane de filtre en céramique, immobilisé sur la membrane de filtre en céramique, intégré ou incorporé dans la membrane de filtre en céramique, le composant actif ou le précurseur de celui-ci est de préférence sélectionné parmi les composants catalytiques, tels que le platine et les compositions de platine ; les composants organiques tels que les enzymes ; et/ou les composants échangeurs d'ions tels que les billes de résine échangeuse d'ions.

10. Filtre aveugle en céramique selon l'une quelconque des revendications précédentes dans lequel ledit filtre aveugle en céramique a une forme de disque et/ou de récipient ou le filtre aveugle en céramique comprend une pluralité de canaux d'entrée allongés à extrémités fermées, chacun desdits canaux d'entrée à extrémités fermées comprend une paroi de canal totalement ou partiellement dotée d'une ou plusieurs membranes de filtre en céramique, lesdites une ou plusieurs membranes de filtre en céramique comprennent une couche avant sélective tournée face à l'intérieur desdits canaux d'entrée allongés à extrémités fermées respectifs, lesdits canaux d'entrée allongés à extrémités fermées étant de préférence agencés avec une distance entre eux de telle sorte qu'un liquide peut traverser lesdites une ou plusieurs membranes de filtre en céramique desdits canaux d'entrée allongés à extrémités fermées.

11. Filtre aveugle en céramique selon l'une quelconque des revendications précédentes dans lequel ledit filtre aveugle en céramique comprend un volume de fluide de filtre et lesdites une ou plusieurs membranes de filtre en céramique dudit filtre aveugle comprennent une surface de filtre totale, ladite surface de filtre totale étant d'au moins 0,1 m² par l de volume de fluide de filtre, par exemple d'au moins 0,5 m² par l de volume de fluide de filtre, par exemple d'au moins 1 m² par l de volume de fluide de filtre, par exemple d'au moins 5 m² par l de volume de fluide de filtre.

12. Filtre aveugle en céramique selon l'une quelconque des revendications précédentes dans lequel ledit filtre aveugle en céramique comprend une structure de membrane de filtre en céramique avec une résistance suffisamment faible pour permettre un flux d'eau amorcé d'au moins environ 1 m³/(h*m²*bar), mesuré à 25 °C et à une différence de pression où delta P est une fonction linéaire par rapport au flux, de préférence le flux d'eau amorcé est d'au moins 1 m³/(h*m²*bar), par exemple d'au moins 5 m³/(h*m²*bar), par exemple d'au moins 20 m³/(h*m²*bar), par exemple peut atteindre 100 m³/(h*m²*bar), par exemple de 1 m³/(h*m²*bar) à 55 m³/(h*m²*bar), de préférence ladite couche avant sélective comprend un diamètre de taille de pore maximal de 500 nm ou moins, ledit filtre aveugle en céramique comprenant une structure de membrane de filtre en céramique avec une résistance suffisamment faible pour permettre un flux d'eau amorcé de 1 m³/(h*m²*bar), mesuré à 25 °C et à une différence de pression où delta P est une fonction linéaire par rapport au flux, de préférence le flux d'eau amorcé est d'au moins 2 m³/(h*m²*bar), par exemple d'au moins 5 m³/(h*m²*bar), par exemple d'au moins 20 m³/(h*m²*bar), par exemple peut atteindre 100 m³/(h*m²*bar), par exemple de 1 m³/(h*m²*bar) à 55 m³/(h*m²*bar).

13. Système de filtre comprenant un filtre aveugle en céramique selon l'une quelconque des revendications précédentes, un tuyau d'injection pour injecter un liquide dans le filtre aveugle en céramique et/ou un tuyau de perméat pour retirer le liquide filtré et au moins une pompe à liquide reliée au dit tuyau d'injection et/ou au dit tuyau de perméat, ledit système de filtre comprend un filtre aveugle en céramique, un tuyau d'injection pour injecter un liquide dans le filtre aveugle en céramique et/ou un tuyau de perméat pour retirer le liquide filtré et au moins une pompe à liquide reliée au dit tuyau d'injection et/ou au dit tuyau de perméat, ledit système de filtre comprenant en outre un tuyau d'injection de gaz relié au dit système de filtre pour injecter un gaz dans le rétrolavage à travers le filtre aveugle en céramique, ledit système de filtre étant de préférence agencé pour fournir ledit rétrolavage avec le gaz comme l'unique écoulement ou simultanément avec le rétrolavage avec un liquide ou simultanément avec un rétrolavage avec un liquide chimique.

14. Procédé de filtration de liquide à travers un filtre aveugle en céramique selon l'une quelconque des revendications 1 à 12 précédentes, ledit procédé comprenant le fonctionnement dudit filtre aveugle en céramique dans des modes alternés comprenant un mode filtration et un mode nettoyage, dans lequel ledit liquide est filtré à travers ledit filtre aveugle en céramique dans ledit mode filtration, dans lequel ledit mode nettoyage comprend le fait de faire passer un liquide chimique dans un écoulement ordinaire et/ou dans un rétrolavage à travers ledit filtre aveugle en céramique, ledit liquide chimique comprenant un agent de régulation du pH et/ou un surfactant, par exemple un détergent.
